# EUROPEAN PATENT APPLICATION

(11) **EP 0 822 724 A2**
(43) Date of publication of application: **04.02.1998**
(21) Application number: 97110814.7
(22) Date of filing: 01.07.1997
(51) Int. Cl.: H04N 9/804

(54) **Digital video signal recording and/or reproducing apparatus**

(30) Priority: 03.07.1996 JP 193843/96; 22.07.1996 JP 210648/96; 29.07.1996 JP 216049/96
(71) Applicant: VICTOR COMPANY OF JAPAN, LIMITED, Yokohama-Shi Kanagawa-Ken 221 (JP)
(72) Inventor: Fujiwara, Hisashige, Yokohama, Kanagawa-ken (JP); Teranishi, Yasuhiko, Yokosuka, Kanagawa-ken (JP)
(74) Representative: Wagner, Karl H., Dipl.-Ing.

(57) **Abstract**

A digital image signal recording apparatus and method are provided which can record both a motion-picture signal (SD signal) and a high-definition still-picture signal (HDS signal). The HDS signal is stored in an HD frame memory. Read addresses are controlled, and the image data of one frame of the HDS signal is converted into the data of a plurality of frames of SD signals. Dummy data whose values are the same are inserted into marginal regions of SD signals (areas in which pixels of the HDS signal are not contained), and the results are applied to a VCR unit of the DVC standard to be recorded on magnetic tape.

## Description

The present invention relates to digital image signal recording and recording/playback method and apparatus. More particularly, it relates to a method and apparatus that records/playbacks a high-definition still-picture signal.

### BACKGROUND OF THE INVENTION

A standard called "DVC" (hereinafter the "DVC Standard") has been proposed for digital VCRs (video cassette recorders) that record image data through data compression (e.g., pp. 48-55, National Technical Report, Vol. 41, No. 2, April 1995). The DVC Standards include a standard for the recording of ordinary-resolution image signals (SD signals) at the current broadcasting level and a standard for the recording of high-definition image signals (HD signals). The following is a brief explanation of the standard for recording SD signals.

In the so-called 525/60 method (on which the NTSC method is based), video signals are sampled in a 4:1:1 ratio. Under this method, luminance (Y) signals are represented by 720 effective horizontal pixels and 480 effective vertical lines per frame. Chrominance (Cb, Cr) signals are represented by 180 effective horizontal pixels and the same 480 effective vertical lines per frame as luminance signals.

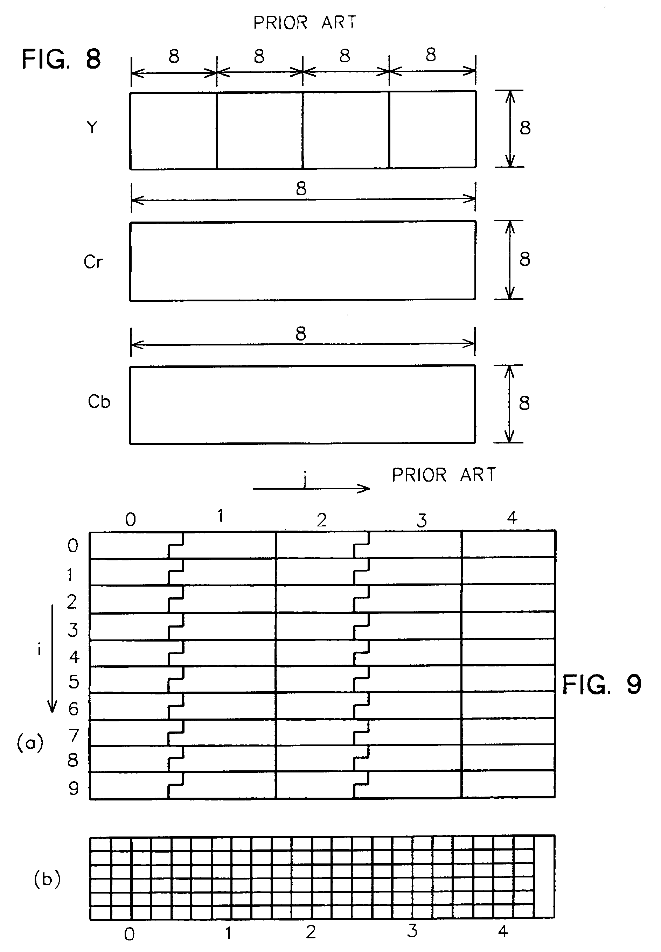

These effective pixel data are blocked and a discrete cosine transform (DCT) operation is performed on the data. A block on which a DCT operation is performed (hereinafter the "DCT block"), in concrete terms, comprises blocks of 8 horizontal pixels × 8 vertical pixels for each frame of luminance (Y) signals and each frame of chrominance (Cb, Cr) signals. As shown in Figure 8, six DCT blocks, consisting of four DCT blocks for the Y signal and one DCT block each for a Cb signal and a Cr signal, and all associated with a given position and a given area on the screen, are called a "macro-block". Further, a screen comprising one frame is split into 27 macro-blocks to form a super-block as shown in Figure 9(a). And, in Figure 9(b), one super-block is selected from each column and one mask block is extracted from each super-block. Five super-blocks thus obtained make up one video segment. During data compression, the compression process is controlled so that the amount of data per video segment is no greater than a specified amount.

Two modes of DCT operations are provided: one in which 8 × 8 DCT operations are performed in terms of 8 horizontal pixels × 8 vertical pixels per frame; and one in which 8 × 4 DCT operations are performed in terms of 8 horizontal pixels × 4 vertical pixels per field, such that 8 × 8 blocks are formed by taking the sums and the differences of the DCT coefficients of a pair of fields. During the encoding process, these modes can be switched back and forth in an adaptive manner. The DCT coefficients that are obtained by DCT operations are quantized by selecting an appropriate quantization table so that the amount of data, produced after quantization and variable-length encoding, is less than, and close to, a specified amount.

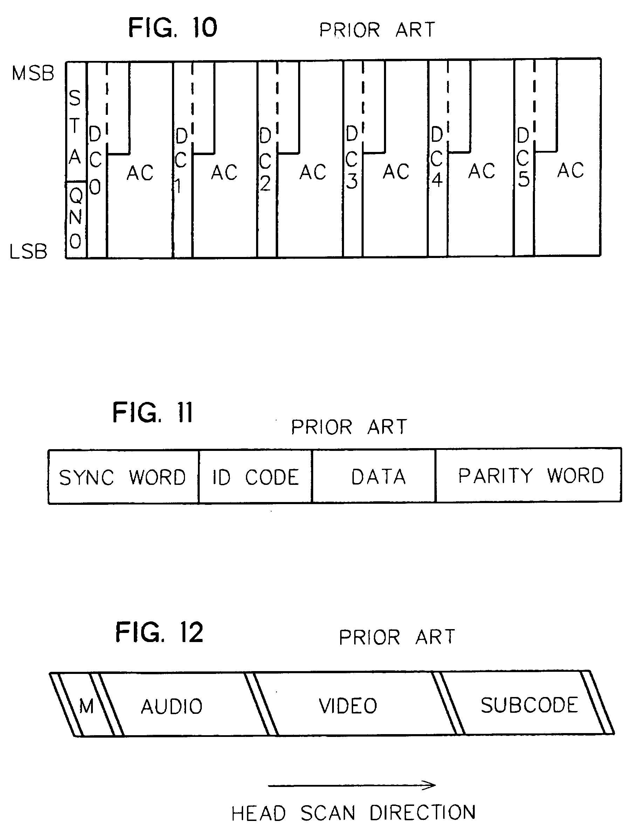

The data obtained by quantization and variable-length encoding are formatted in units of macro-blocks as shown in Figure 10. Further, as shown in Figure 11, they are recorded on magnetic tape in the form of a sync block to which a SYNC word, an ID code, and an error correction parity word have been added. Image data per frame are divided into 10 tracks before they are recorded. The image data representing one horizontal row of a super-block in Figure 9 are recorded on one track. Figure 12 shows the layout of data on a track.

As shown in Figure 10, the formatted data include various parameters that are necessary for decoding (e.g., error and conceal information STAs and table number QNO for a selected quantization table). In this process, data representing one video segment are stored in five sync blocks. The data representing direct-current components are stored in the DC region (DC0 through DC5), and the data representing alternating-current components are stored in the AC region. Basically, AC components are stored in the AC region of a given DCT block in the same sync block as the one in which DC components are stored. However, if the amount of data involved exceeds the capacity of an allocated location, AC components are stored in either a free AC region in the same sync block or a free AC region in the same video segment.

The ID code shown in Figure 11 stores a track pair number, which indicates the sync block for the track in a total of 10 tracks that make up one frame of image data. The ID code also stores a sync block number, which indicates the specific sync block in a track. Further, the ID code for a sync block that stores image data contains a sequence number (SEQ No.). Sequence numbers are generated by assigning numbers 0 through 11 to 12 consecutive frames.

In Figure 12 the code "ITI" denotes an ITI (Insert and Track Information) sector in which information is recorded that facilitates tracking control during insertion editing. Similarly, the code "AUDIO" denotes an audio sector, which consists of 9 sync blocks storing audio data, and 5 sync blocks storing outer parity data. The code "VIDEO" denotes a video sector, which consists of 135 sync blocks storing video data, 3 sync blocks storing auxiliary data called "video AUX", and 11 sync blocks storing outer parity data. Code "SUBCODE" denotes a subcode sector in which time code and similar pieces of information are stored. All other areas in Figure 12 are gaps, which provide a margin of safety to prevent an accidental destruction of other sectors when insertion editing is performed in units of sectors.

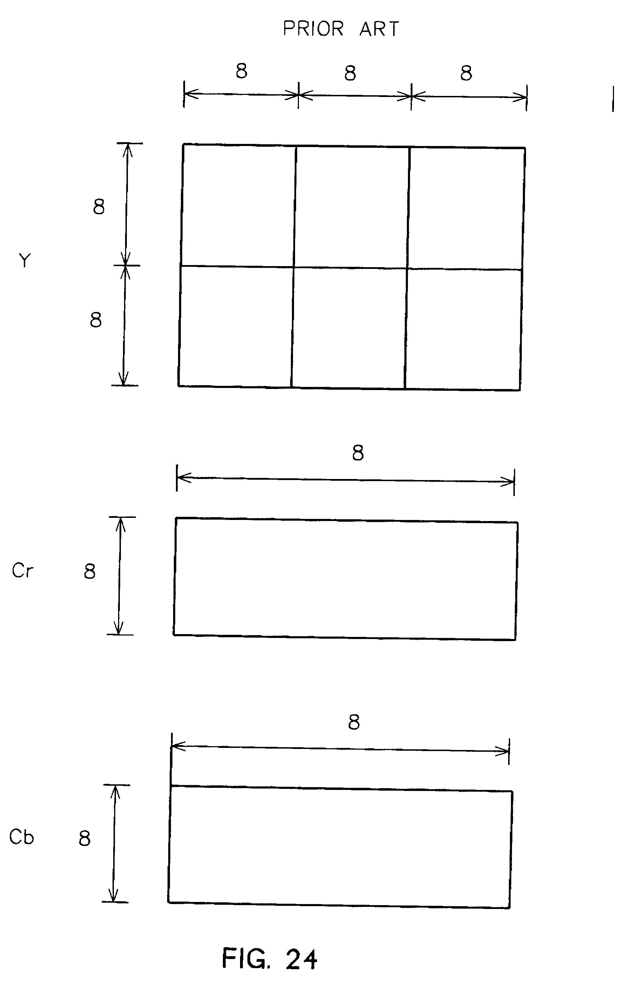

A standard for HD signal (hereinafter denoted as "HD-DVC standard") is basically the same as the above-mentioned standard for SD signal. In a so-called 1125/60 method, image signals are recorded as Y signals composed of 1008 horizontal effective pixels × 1024 vertical effective lines per frame, and chrominance signals (Cb and Cr signals) respectively composed of 336 horizontal effective pixels × 512 vertical effective lines per frame. In this case, a macro-block consists of 8 DCT blocks as shown in Figure 24: 6 DCT blocks of Y signal and one DCT block of each of the Cb and Cr signals which are all in the same area at the same location on a screen.

The DVC standard includes, other than the standard for recording/reproducing the above-mentioned SD signal, a standard for recording/reproducing an HD signal, high definition motion-picture signal. However, there is no defined standard for recording/reproducing a still picture having a definition higher than the SD signal. Also, an image signal has a different ratio of the pixel numbers of luminance signals and chrominance signals (YC pixel number ratio). Typical YC pixel number ratios are 2:1 and 4:1.

Some existing camcorders with integrated video cameras and VCRs provide a vibration compensation feature. A previously known vibration compensation method involves the use of a camera device that contains a relatively large number of pixels. In this method an area representing a part of the output signals from the camera device is treated as effective pixels and, when a vibration is detected, the area is selected in order to compensate for the vibration.

The comparison of a TV picture produced by the so-called 525/60 method with the picture quality of a silver halide photograph indicates that TV pictures are inferior to silver halide pictures with regard to the number of pixels and in gray scale. Although the gray scale can be improved by increasing the number of quantization bits during analog-to-digital (A/D) conversion, in the VCRs based on the aforementioned DVC standard the number of quantization bits is fixed at 8. Therefore, VCRs based on this standard are inherently incapable of producing a picture quality that approximates the quality of a silver halide picture.

As another issue, the vibration compensation described above requires frame memory and results in increased costs.

### SUMMARY OF THE INVENTION

It is an object of the present invention to overcome the above-noted problems of the prior art.

A further object of the present invention is to provide a digital image recording method and apparatus which can record a motion-picture signal and a high-definition still picture, and to provide a digital image recording/playback method and apparatus which can record/reproduce a motion-picture signal and a high definition still picture. In addition apparatus incorporating the principles of the present invention is capable of recording still-picture image signals having different ratios of YC pixel numbers.

Another object of the present invention is to provide a digital image recording method and apparatus capable of recording image signals containing a specified, fixed number of quantized bits and still picture signals composed of a larger number of quantization bits.

Yet a further object of the present invention is to provide a low-cost digital image signal recording method and apparatus that also offers both a vibration compensation feature and a high-definition still image signal recording capability.

In order to achieve the above objectives, the invention incorporating the principles of the present invention includes a method for recording a digital image signal having a first definition. The method provides a first step of splitting a still-picture signal having a second definition higher than the first definition into n subdivisions, where n is an integer at least equal to 2. A second step of the method includes converting the results of the first step into image signals of the first definition to produce split conversion signals. Finally, a third step includes recording the split conversion signals on a recording medium.

The method incorporating the principles of the present invention may he practiced wherein the second step includes converting the image signals for a predetermined pixel block and the third step includes compressing image data by orthogonally transforming the image signals for the predetermined pixel block.

In a preferred method each of the image signals having the first and second definitions is composed of a luminance signal and two chrominance signals. The third step records in units of macro-blocks, each of the macro-blocks consisting of a plurality of the predetermined pixel blocks of the luminance signal and the chrominance signals which correspond to the luminance signal, and in the second step the macro-blocks are converted.

The present invention may also include a digital image signal recording apparatus for recording an image signal having a first definition. The apparatus has a split conversion means for splitting a still-picture signal having a second definition higher than the first definition into n subdivisions, where n is an integer at least equal to 2 and converting the results into image signals of the first definition to produce split conversion signals. Finally, the apparatus also includes recording means for recording the split conversion signals on a recording medium.

The present invention may also be practiced by a digital image signal recording/playback apparatus that records/reproduces image signals having a first definition. Such apparatus includes a split conversion means for splitting a still-picture signal having a second definition higher than the first definition into n subdivisions, where n is an integer at least equal to 2, and converting the results into image signals of the first definition to produce split conversion signals. The apparatus also includes a recording means for recording the split conversion signals on a recording medium and a playback means for reproducing the signals recorded on the recording medium and producing output signals. Finally, the apparatus includes a playback conversion means for converting the output signals into still-picture signals of the second definition.

Another apparatus incorporating the principles of the present invention may include an image signal processor connected to a digital image signal recording apparatus for recording image signals of a first definition. Such apparatus includes a split conversion means in which a still-picture signal of a second definition higher than the first definition is divided by n, where n is an integer at least equal to 2, to convert it into the image signals of the first definition and to produce split conversion signals, wherein the split conversion signals are applied to the digital image signal recording apparatus.

Still another method incorporating the principles of the present invention includes recording a first definition image signal having a luminance and two chrominance signals with a ratio of pixel numbers m:1, where m is an integer at least equal to 2. The method has the steps of splitting a still-picture signal of a second definition higher than the first definition into s subdivisions to produce split conversion signals, where s is an integer at least equal to 2, the second definition signal having a luminance signal and two chrominance signals with a ratio of pixel numbers n:1, where n is an integer at least equal to 1 and n < m. The method continues by recording image data on a recording medium by compression, orthogonally transforming image data for a given pixel block, and processing signals on a macro-block basis which comprises one of each given pixel block of the two chrominance signals and corresponding m given pixel blocks of the luminance signal, and providing the macro-blocks by adding on m-n given pixel blocks of dummy data to the block group consisting of n given pixel blocks of luminance signals and one of each given pixel block of two chrominance signals which make up the second definition image signal.

Such method further can include the steps of culling pixels of the chrominance signals of the second definition still-picture signals, converting the pixel ratio between the luminance signals and the two chrominance signals to m:1, and dividing the second definition still-picture signal by t, where t is an integer at least equal to 2, to convert the image data into the first definition image signals and to produce culled split conversion signals, and recording the split conversion signals or the culled split conversion signals on the recording medium.

The apparatus incorporating the principles of the present invention may also include a digital image signal recording apparatus having a recording means for recording data on a recording medium by compression, by performing a orthogonal transformation on image signals that are quantized by p bits, where p is an integer at least equal to 1, and composed of three independent signals for a given pixel block. Such apparatus includes a split conversion means for splitting still-picture signals that are quantized in q bits, where q is an integer such that q > p, and are composed of three independent signals, into high-bit signals that are requantized in terms of high u bits, where u is an integer at least equal to 1, for each pixel, and low-bit signals, that are obtained by subtracting from the original signals the signals that are requantized in terms of high v bits, where v is an integer such that u ≥ v, for each pixel, that converts the high-bit and low-bit signals into signals composed of p bits, and that produces split p-bit signals. The apparatus also includes a sorting means that outputs the split p-bit signals by sorting them so that they make up the given pixel block, whereby the recording means records the output signals from the sorting means in said recording medium.

In a further embodiment, the sorting means sorts the signals so that the pixels composing the given pixel block of signals equal in number to the q-p power of 2 are all distinct.

### BRIEF DESCRIPTION OF THE DRAWINGS

The above and other objects, features, and advantages of the present invention will become more apparent from the following detailed description taken with the accompanying drawings, in which:
Figure 1 is a schematic block diagram showing the configuration of a digital image signal recording/playback apparatus of an embodiment of the present invention;
Figure 2, including Figures 2(a) through 2(c), illustrates a method of converting a high definition still picture into a normal definition image signal;
Figure 3 illustrates a method of culling pixels of the high-definition still-picture signal;
Figure 4 illustrates a method of converting the image data obtained through a culling process into the data of one frame of a normal definition image signal;
Figure 5, including Figures 5(a) through 5(c), illustrates a method of converting a high-definition still-picture signal into a normal definition image signal;
Figure 6 illustrates a method of culling the pixels in a high-definition still-picture signal;
Figure 7 illustrates another method of culling the pixels in a high-definition still-picture signal;
Figure 8 illustrates a macro-block of the DVC standard;
Figure 9, including Figures 9(a) and 9(b), illustrates a super-block of the DVC standard;
Figure 10 illustrates data structure after formatting based on the DVC standard;
Figure 11 illustrates a SYNC block of the DVC standard;
Figure 12 illustrates a data structure on a magnetic tape of the DVC standard;
Figure 13 is a schematic block diagram showing the configuration of the digital image recording/playback apparatus of another embodiment of the present invention;
Figure 14, including Figures 14(a) through 14(d), illustrates further details of the configuration of a part of the apparatus shown in Figure 13;
Figure 15, including Figures 15(a) and 15(b), illustrates how high-gray scale still-picture signals are converted to image signals of an ordinary gray scale;
Figure 16, including Figures 16(a) and 16(b), illustrates how high-gray scale still-picture signals are converted to image signals of an ordinary gray scale;
Figure 17 illustrates the organization of a macro-block that contains image signals obtained by means of data conversion;
Figure 18, including Figures 18(a) and 18(b), illustrates how high-gray scale still-picture signals are converted to image signals of an ordinary gray scale;
Figure 19 illustrates the organization of a macro-block that contains the image signals obtained by means of data conversion;
Figure 20 illustrates the configuration of a camera unit;
Figure 21, including Figures 21(a) and 21(b), illustrates the configuration of the recording processing circuit and the playback process circuit of Figure 13;
Figure 22, including Figures 22(a) and 22(b), illustrates the organization of high-definition still-picture signals;
Figure 23, including Figures 23(a) and 23(b), illustrates how high-definition still-picture signals are converted to image signals of ordinary resolution;
Figure 24 illustrates the composition of a macro-block of the DVC standard (HD signal);
Figure 25, including Figures 25(a) and 25(b), illustrates details of the configuration of a further embodiment of part of the apparatus shown in Figure 13;
Figure 26, including Figures 26(a) through 26(c), illustrates how high-definition still-picture signals are converted to image signals of ordinary resolution;
Figure 27 illustrates the organization of a macro-block associated with high-definition signals obtained by conversion;
Figure 28 illustrates a further mode for converting high-definition signals (HDS) into image signals of ordinary resolution;
Figure 29 illustrates how higher-definition still picture signals (UHDS) are converted to high-definition image signals (HD signals); and
Figure 30 illustrates the organization of a macro-block associated with HD signals obtained by conversion.

### DESCRIPTION OF THE PREFERRED EMBODIMENTS FIRST EMBODIMENT

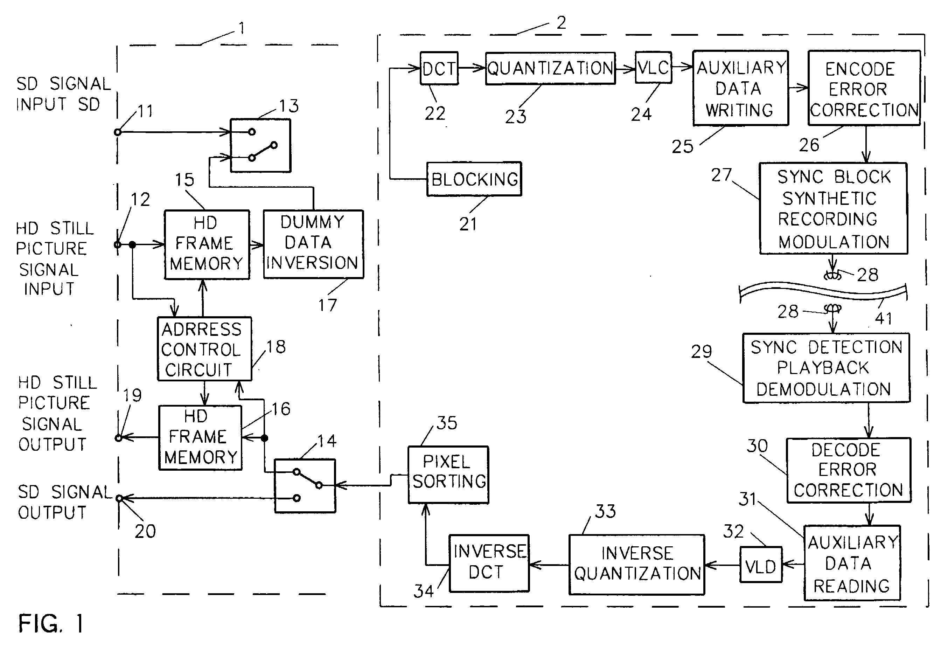

Referring to the drawings, Figure 1 is a block diagram showing a configuration of a digital image signal recording/playback apparatus of a first embodiment of the present invention; this system comprises an image signal switching process section 1 and an image signal recording/reproducing section 2.

The image signal switching process section 1 mainly comprises the following components: an; input terminal 11 through which a digitized SD signal is applied; an input terminal 12 through which a digitized high-definition still-picture signal (hereinafter referred to as "HDS signal") is applied; an output terminal 19 from which a regenerated HDS signal is output; and an output terminal 20 from which a regenerated SD signal is output.

Section 1 also includes first and second switching circuits 13 and 14 for switching from an SD signal to an HDS signal; first and second HD frame memory units 15 and 16 for storing HDS signals in units of frame; a dummy data inserting circuit 17 for inserting dummy data (to be described later); and an address control circuit 18 for controlling read/write addresses of the first and second HD frame memories 15 and 16.

In this embodiment, the Y signal in an HDS signal has 1280 horizontal effective pixels and 1000 vertical effective (raster) lines in a frame (hereinafter a frame of HDS signal is referred to as an "HD frame", and a frame of SD signal is referred to as an "SD frame"); Cr and Cb signals have 320 horizontal pixels (made by culling one-fourth of the pixels of the Y signal) and 1000 vertical lines (the same as the Y signal).

The HDS signals which are applied to terminal 12 are supplied to the first HD frame memory 15 and to the address control circuit 18, and the HDS signals corresponding to one HD frame are stored in the first HD frame memory 15. The address control circuit 18, as described later, controls read-out addresses of the HD frame memory and reallocates the pixels of the HDS signals. The HDS signal readout from the HD frame memory 15 is supplied through the dummy data inserting circuit 17 to the first switching circuit 13. The first switching circuit 13 switches the SD signal applied to terminal 11 with the HDS signal in which the pixels are reallocated, and supplies it to a blocking circuit 21 of the image signal recording/reproducing section 2.

The image signal recording/playback unit 2 used in this first embodiment is comprised of a VCR based on the DVC standard and will be referred to as "VCR unit 2" hereinafter. An image signal recording system of VCR unit 2 mainly comprises: a blocking circuit 21 for blocking pixels for DCT computation; a DCT circuit 22 for DCT computation; a quantization circuit 23; a VLC (variable-length coding) circuit 24; an auxiliary data Writing circuit 25 for writing data to the subcode sector and adding video AUX data; a correction coding circuit 26 for adding a parity bit for correcting errors; a SYNC block synthesis/recording modulation circuit 27 for synthesizing SYNC blocks and modulating them to he recorded on a magnetic tape; and a magnetic head 28 for recording the image data onto the magnetic tape 41.

An image signal reproducing system of VCR unit 2 mainly comprises: a magnetic head 28 for reproducing image data from the magnetic tape 41; a SYNC detection playback demodulation circuit 29 for detecting and demodulating SYNC blocks; an error correcting decoding circuit 30 for correcting the errors according to the parity bit data; an auxiliary data reading circuit 31 for reading out the data on the subcode sectors, video AUX data, etc.; a VLD (variable-length decoding) circuit 32; an inverse quantization circuit 33; an inverse DCT circuit 34 for performing inverse DCT computation; and a pixel sorting circuit 35 for pixel sorting.

The output signals from the pixel sorting circuit 35 in VCR unit 2 are applied to the second switch 14 in the image signal switching process section 1. The second switch 14 outputs the results to the SD signal output terminal 20 side if the regenerated signal is an SD signal, and outputs the results to the second HD frame memory 16 side if the regenerated signal is an HDS signal. When reproducing an HDS signal, the address control circuit 18 controls the write address in the HD frame memory such that the pixels sorted during recording are returned to the original locations. Circuit 18 also controls the read addresses such that the data representing 1HD frame is output in the order in which they were applied during recording.

Next, a method of reallocating pixels during the recording of HDS signals is described.

Input HDS signals applied to terminal 12 are stored in the HD frame memory 15. They are divided into four in the screen area. The results are converted such that the pixel signals for each divided area correspond to the image signals of one frame of SD signals (1 SD frame), and these are applied to VCR unit 2.

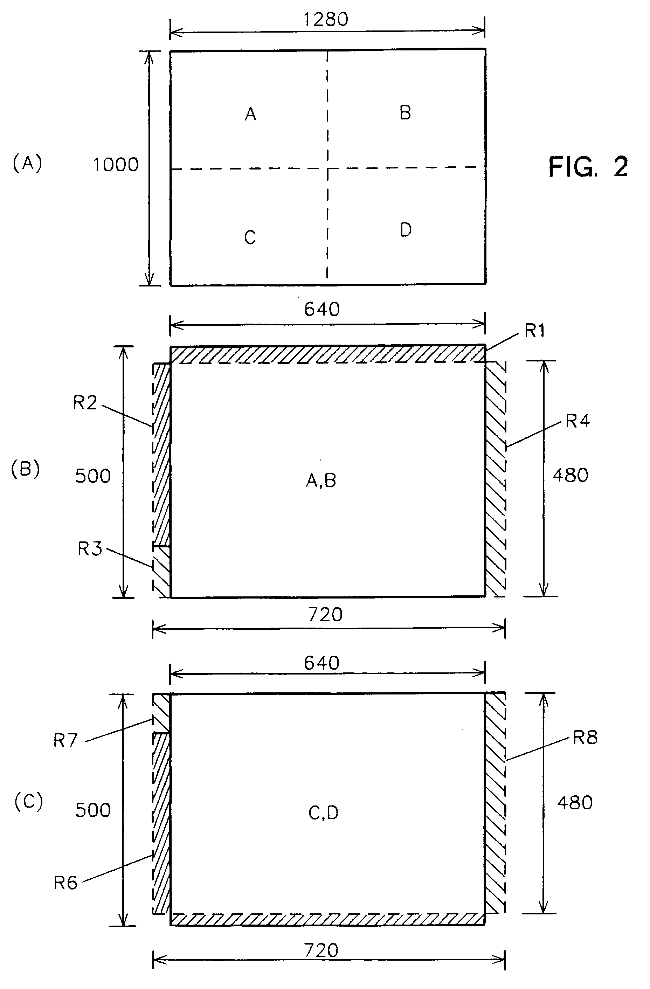

Figure 2 is a diagram describing a method of dividing the Y signal into four. 1 HD frame is divided by two in both the horizontal and vertical directions. Each of the divided areas A, B, C, and D respectively consist of 640 horizontal pixels × 500 vertical pixels. 1SD frame consists of 720 horizontal pixels × 480 vertical pixels. Because each area does not correspond to 1SD frame, in pixels, the pixels in each of the areas A through D need to be moved as follows:

The area A, B is moved, as shown in Figure 2(b), such that the bottom end of the area A, B matches the bottom end of a SD frame and is positioned horizontally at approximately the center of the SD frame. The pixels (640 horizontal pixels × 20 vertical pixels) in the top projected area R1 are moved to an area R2 (32 horizontal pixels × 400 vertical pixels) on the left side of the SD frame. At that time, the pixels are moved by a minimum unit (8 horizontal pixels × 8 vertical pixels) as much as possible. Since a Y signal consists of a macro-block with 32 horizontal pixels × 8 vertical pixels, as shown in Figure 8, the pixels should be moved by this unit.

In this embodiment, the pixels are taken by units (32 horizontal pixels × 16 vertical pixels) out of the area R1 (640 × 20 pixels), and stored in the area R2, unit by unit. Consequently, 640 horizontal pixels × 4 vertical pixels remain. Therefore, the adjacent 8 horizontal pixels × 4 vertical pixels are arranged vertically to make a block (8 horizontal pixels × 8 vertical pixels), and four of the blocks are gathered to make a unit (32 horizontal pixels × 8 vertical pixels). The units are sequentially stored in the area R2.

In the hatched area R3 of Figure 2(b) (32 horizontal pixels × 80 vertical pixels) and area R4 (48 horizontal pixels × 480 vertical pixels) in an SD frame, dummy data whose values are all "16" are stored.

As shown in Figure 2(c), the areas C and D correspond to the SD frame such that their top ends coincide with the top end of the SD frame and they are positioned horizontally approximately at the center of the SD frame. The pixels in the area R5 are moved to the area R6, and at the same time, dummy data (all values are "16") are stored in the areas R7 and R8. The method of moving pixels from the area R5 to the area R6 remains the same as Figure 2(b).

Cr and Cb signals are also respectively divided into four in the same manner as the Y signal, and converted into data of 1 SD frame of 180 horizontal pixels × 480 vertical pixels. Also for this case, dummy data (all values are "128") are stored in the area (8 × 80 pixels) corresponding to the areas R3 and R7, and the areas (12 × 480 pixels) corresponding to the areas R4 and R8.

As described above, the pixel data of one-fourth frame of the HDS signal is sequentially converted into the pixel data of one frame of the SD signal. The image signal corresponding to 1 HD frame is converted into the image signal of 4 SD frames, and input into the VCR unit 2.

In a recording system in the VCR unit 2, processing such as DCT computation, quantization, variable-length coding, etc. based on the above-mentioned DVC standard, are performed, and a special processing (to be described below) is performed for HDS signals to record image data on a magnetic tape. In the DVC standard, the image data of 1 SD frame is divided into 10 tracks for recording. Therefore, the 10 tracks are regarded as one track frame.

In this embodiment, the image data corresponding to each of the divided areas A, B, C, and D as shown in Figure 2(a) are successively recorded over 3 track frames (30 tracks). Therefore, the image data of 1 HD frame is recorded over 12 track frames. The processing is done by the address control circuit 18 in the image signal switching process section 1 which reads the image data of 1 SD frame three times. Note that this processing may be performed in the SYNC block synthesis/recording modulation circuit 27 during SYNC block synthesis.

In each subcode sector (an auxiliary data recording area of each track frame), data are recorded that indicate a certain section of 1 HD frame, obtained by dividing 1 HD frame into four, is recorded in the track frame, and data that indicate which section is recorded. Also, as video AUX data (auxiliary data), the information indicating the image is a still-picture, the information indicating whether or not the image data is different from that of the previous track frame, and the data indicating the aspect ratio of 1 HD frame are all recorded. This processing is performed in the auxiliary data writing circuit 25.

The processing in a reproducing system in VCR unit 2 is next described. The data recorded on the magnetic tape 41 is reproduced and demodulated to be a digital data stream. A SYNC word (see Figure 11) is detected from the data stream and data for one SYNC block is obtained. In the SYNC block, an error detection-correction processing using inner parity is performed on the playback data obtained in such manner. A further error detection-correction processing using outer parity is performed for video data and the like. Then, the auxiliary data is read out in unit 31 and a variable-length decoding (unit 32) (an inverse processing of variable-length coding), an inverse quantization (unit 33), and an inverse DCT computation (unit 34) are sequentially performed on the data. The data are sorted back to the original arrangement (unit 35), and applied to the second switching circuit 14 in the image signal switching processor 1.

The above-mentioned processing is commonly performed for SD signals and HDS signals. When reproducing HDS signals, in the auxiliary data read circuit 31, the data in the subcode sector and video AUX data are read out to obtain the necessary information such as the data indicating which section of 1 HD frame is recorded in the track frame. Then, the information on the HDS signal is supplied to the image signal switching processor 1.

The address control circuit 18 controls the address for the time when the playback data is stored in the second HD frame memory 16, based on the information on HDS signal supplied from VCR unit 2. At that time, since the four divided image data, are respectively recorded over 3 track frames sequentially, the same data is reproduced from the three frames. From them, the data in the third frame is stored in a given location in the HD frame memory 16. This is recognized as the data in the third frame, based on the data which have been recorded as video AUX data, the information indicating the fact that it is a still picture and the information indicating whether or not the data are different from those in the previous track frame;.

The data which exist in all four divided areas are stored in the HD frame memory 16 in the same manner, and, at the same time, are read out from the HD frame memory 16 as the data of 1 HD frame. The aspect ratio, etc. of the read image is determined based on the information recorded as video AUX data. In this manner, the regenerated HDS signal is obtained.

In this embodiment, the first switching circuit 13 in Figure 1 is switched according to user's recording selection of either SD signals or HDS signals. The information on whether it is an SD signal recording or an HDS signal recording is supplied to a control section (not illustrated) which performs switch-control in each section during recording in the VCR unit 2. During playback, the control section checks if they are SD or HDS signals, based on the auxiliary data read through in the auxiliary data read circuit 31, and switch-controls the second switch 14.

As described above, in this embodiment, a still-picture signal of 1 HD frame is divided into four areas, converted into image signals of 1 SD flame, then recorded/reproduced by the VCR unit 2 based on the DVC standard. With this configuration, a digital image signal recording/reproducing apparatus, which can record/reproduce both a normal definition motion-picture signal (SD signal) and a high definition still-picture signal together, can be manufactured inexpensively.

When the image signal of 1 HD frame is divided into four areas and the pixels are moved to make a normal definition image signal of 1 SD frame, the pixels are moved by a minimum unit of 8 × 8 (DCT block unit) pixels as much as possible. Even if the unit does not have 8 × 8 pixels, the pixels are collected from the vicinity to make the unit of 8 × 8 pixels. For this reason, when performing a DCT computation on a normal definition image signal of 1 frame, the correlation between the pixels within the DCT block is high, and therefore the image data can be compressed efficiently.

Also, the pixels are moved such that the macro-blocks, which consist of 8 × 8 pixels in each of the chrominance signals of the HDS signal and the corresponding 32 × 8 pixels in a Y signal, coincide with the macro-blocks during compression in the VCR unit 2 as closely as possible. Consequently, excellent reconstruction (or "concealment") can be carried out during playback.

Since dummy data [all values are constant ("16" or "128")] are stored in the marginal regions (the areas R3, R4, R7, and R8 in Figure 2) of the image signal of 1 SD frame, the DCT computations on the data in those areas result in the value "0" for a constant of the ac signal, and only a constant of the dc signal and EOB code are left which are used for variable-length coding. Therefore, in the video segment (a unit to make the bit after variable-length coding less than a given value) including DCT block, the bits can be allocated in other DCT blocks. In other DCT blocks, a smaller value may be assigned during the quantization step, thus decreasing the quantization noise. As a result, a high-quality playback image can be obtained.

When the image signal of 1 HD frame is divided into four areas and the pixels are moved to make it an image signal of 1 SD frame, the pixels in the vertically projected area (the areas R1 and R5 in Figure 2) are moved to peripheral areas (the areas R2 and R6 in Figure 2) of a normal definition frame while the original allocation of the pixels is maintained as much as possible. Therefore, even when the recorded data is reproduced as normal definition data, there are less incompatibilities.

Since the four divided image data are respectively recorded by 3 track frames (30 tracks) successively, even when the recorded data is partially lost during playback due to unrecoverable errors, a relatively good image data can be obtained by reconstruction (or "concealment"). In other words, even if there are SYNC blocks, which have lost recorded data due to unrecoverable errors, in each track frame, there would be a very small chance that the same SYNC block is lost over the 3 track frames. For this reason, when the last track frame of the 3 track frames is reconstructed (or "concealed") using the playback data of the previous two track frames, the reconstruction (or "concealment") would be excellent.

Also, recorded in the subcode sector in each track frame is the information indicating that a certain area of the four divided areas of a still picture of 1 HD frame is recorded, and the information indicating which area is recorded. Therefore, the data can be read out quickly during fast search playback, and the image data can be detected by fast searching.

The number of pixels for an HDS signal is not limited to 1280 horizontal × 1000 vertical pixels for the Y signal. For example, it may be 1344 horizontal × 1024 vertical pixels. In such case, using the method shown in Figure 2, 672 × 512 pixels are obtained by dividing 1 HD frame into 4 areas. The pixels (672 × 32) exceeding the 480 vertical pixels are moved to the peripheral area of 1 SD flame. At this time, the pixels are taken out by 32 × 32 pixels from the SD frame and stored in the area of 32 × 480 pixels at the left periphery of the SD frame. The remaining pixels of the HD frame are taken out by 16 × 32 pixels and stored in the area of 16 × 480 pixels at the right periphery of the SD frame. Stored in the remaining area in the area at the right periphery is dummy data (all values are "16").

1 HD frame is not necessarily divided into four equal areas. For example, the 1280 × 1000 pixels shown in Figure 2(a) can be divided into four subdivisions: two areas of 640 × 504 pixels, and two areas of 640 × 496 pixels. Further, 1 HD frame is not necessarily divided into four areas, but it may be divided into 6 areas, approximately equally splitting 1 HD frame consisting of, for example, 1920 × 1036 pixels.

The values of dummy data which are stored in the marginal areas in 1 SD frame are not limited to "16" or "128", but may be any value as long as the value is the same within the range of a DCT block (8 × 8 pixels) which is a unit for DCT computation.

In the above-mentioned embodiment, a VCR unit 2 based on the SD signal standard is used for recording/reproducing a still-picture signal of a higher definition than the SD signal. Even when a VCR unit based on, for example, the HD signal standard is used for recording/reproducing a still picture of a higher definition (for example, 2000 × 2000 pixels) than HD signal, it is needless to say that the above-mentioned technique can be used.

### SECOND EMBODIMENT

In a second embodiment of the present invention, 1 HD frame is divided into four areas using the processing of the first embodiment, and the image data for one-fourth of the pixels of HDS signal are recorded along with the image data of 4 SD frames.

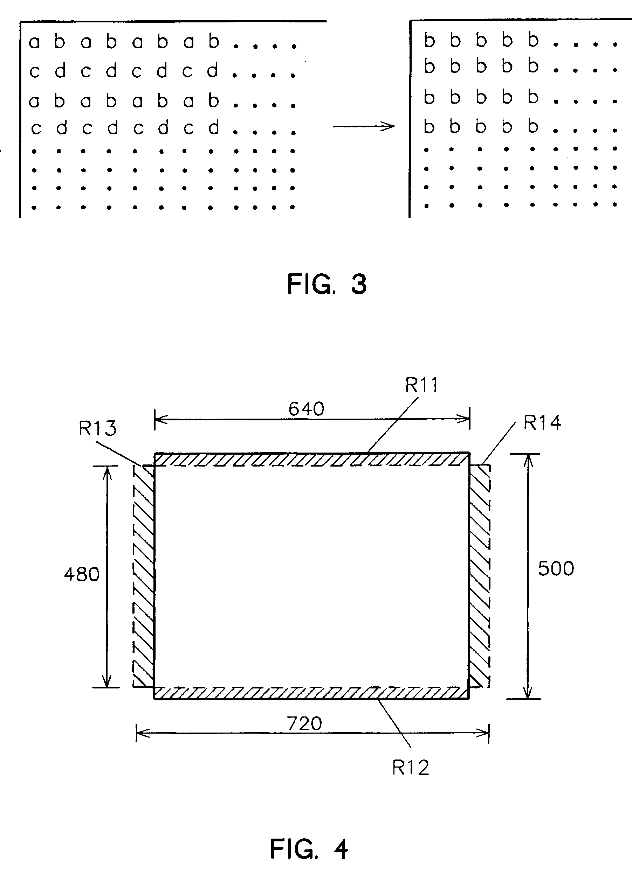

Figure 3 illustrates a process of culling the pixels of the HDS signal to one-fourth; a, b, c, and d represent pixels. As shown in this figure, the pixels are culled every other pixel both horizontally and vertically (i.e., pixels a, c, and d are culled) to make the number of pixels to be one-fourth.

Assume that the input HDS signal has 1280 × 1000 pixels for the Y signal, and 320 × 1000 pixels for the Cb, Cr signal. After the pixels are culled, the Y signal consists of 640 × 500 pixels, and the Cb, Cr signal consists of 160 × 500 pixels.

As shown in Figure 4, the data in the area R11 (640 × 10 pixels) above the frame and in the area R12 (640 × 10 pixels) below the frame are excluded to make the Y signal consist of 640 × 480 pixels, and the Y signal is located substantially at the center of the SD frame (720 × 480 pixels). Also, dummy data (all values are "16") are stored in the peripheral areas R13 and R14 (40 × 480 pixels respectively) at the right and left sides of the SD frame. The same method is used for the Cr signal and the Cb signal: 10 pixels each at top and bottom are excluded to make the Cr and Cb signals to be composed of 160 × 480 pixels. The Cr and Cb signals are located approximately at the center of the frame (180 × 480 pixels). Then, dummy data (all values are "128") are stored in the right and left peripheral areas (10 × 480 pixels respectively) where no corresponding pixels exist.

In the above-mentioned manner, the image data of 1 SD frame is constructed in the image signal switching process section 1 of Figure 1, and input into the VCR unit 2. Subsequently, the image data of 1 HD frame is divided into four subdivisions in the screen area to compose image data of an SD frame as described in the first embodiment. The data of the SD frame is applied to the VCR unit 2. In this way, the image data composed by culling the pixels to one-fourth are respectively recorded over 3 track frames on a magnetic tape. Then the image data composed by dividing into four areas are successively recorded over 3 track frames. Consequently, the image data of 1 HD frame are recorded over 15 track frames.

In the subcode sector of the track frame where the image data composed by culling the pixels is recorded, the information indicating that the image data composed by culling the pixels of 1 HD frame to one-fourth is recorded in the track frame. Also, the video AUX data such as the information indicating it is the still picture, the information or, whether or not the data is different from those in the previous track frame, and the information on the aspect ratio of HD frame, etc. are recorded.

The reproduction process for the data composed by four divided areas remains the same as in the first embodiment. The image data recorded after pixels are culled are not used for reconstructing 1 HD frame of the reproduced HDS signal. However, the image data composed through the culling process can be used to interpolate the pixels to make it an image data of 1 HD frame. The image data of 1 HD frame may be then output as the regenerated HDS signal.

The image data obtained through the culling process is used for searching the recorded data using a cathode ray tube (CRT) monitor for SD signal checking in the fast forward mode. In other words, while fast forwarding the magnetic tape, for reading out the data recorded in the subcode sector and reproducing only the track frame which contains the information indicating the data is recorded through the culling process for output, the HDS signal data can be identified in the monitor for an SD signal.

In this embodiment, as described above, the image signal of 1 HD frame is divided into four areas to compose image data of an SD frame to be recorded, and the image data of the SD frame is produced such that the pixels of 1 HD frame are culled to one-fourth for recording. Consequently, the recorded data can be easily searched on the monitor for SD signal.

Although, in the above-mentioned embodiment, there is no special culling process performed for the selection of the pixels, and pixels may be filtered to restrict bandwidth in a plane prior to the culling process. This can prevent a folding distortion from being generated due to the culling process.

Also, in the above-mentioned embodiment, the image data of an SD frame is composed by simply culling the pixels. However, the 1280 horizontal pixels may be converted to be 720 pixels using the rate of 9:16.

### THIRD EMBODIMENT

In a third embodiment of the present invention, HDS signals can be recorded/reproduced as in the first and second embodiments. However, the input HDS signal of this embodiment has 1280 × 1008 pixels for the Y signal and a digital signal of 640 × 504 pixels for the Cb and Cr signals, i.e., a digital signal having horizontally and vertically half the pixels of the Y signal.

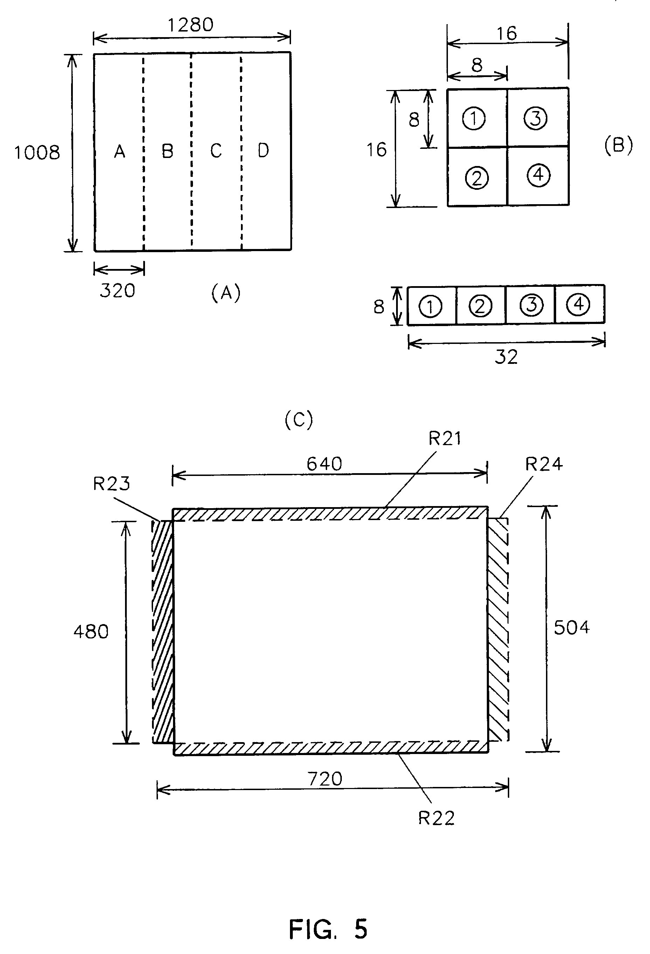

Referring to Figure 5, in this embodiment, 1 HD frame is horizontally divided into four video areas as shown in Figure 5(a). Each of the divided areas A, B, C, and D consists of 320 × 1008 pixels. Cb, Cr signals are also horizontally divided into four areas, each of which is constituted of 160 × 504 pixels. Further, the Y signal is rearranged such that it is taken out by 16 × 16 pixels as shown in Figure 5(b), and the 16 × 16 pixels are divided into four blocks ①, ②, ③, and ④ (each consisting of 8 × 8 pixels) to line up the top and bottom blocks. Consequently, the 320 × 1008 pixels are arranged as 640 × 504 pixels. The Y signal of which the pixels are arranged in the above manner is arranged such that the area of 640 × 480 pixels, which is made by excluding the area R21 (640 × 16 pixels) [see Figure 5(c)] above the frame and the arc R22 (640 × 8 pixels) below the frame, is located approximately at the center of the SD frame (720 × 480 pixels). The pixels in the areas R21 and R22 are moved by a minimum unit (32 × 480 pixels) to the left peripheral area R23 (32 × 480 pixels) of the SD frame; dummy data (all values are "16") are stored in the right peripheral area R24 of the SD frame.

Cr, Cb signals are also arranged such that the area of 160 × 480 pixels, which is composed by excluding the area (160 × 16 pixels) above the frame and the area (160 × 8 pixels) under the frame, is located approximately at the center of SD frame (180 × 480 pixels). The 160 × 16 pixels in the area above the frame and the 160 × 8 pixels in the area under the frame are moved by a minimum unit (8 × 8 pixels) to the left peripheral area (8 × 480 pixels) of the SD frame. Dummy data (all values are "128") are stored in the right peripheral area (12 × 480 pixels) of the SD frame.

The image data of 1 HD frame are converted to image data of 4 SD frames in such a manner.

Except for the above, this third embodiment remains the same as the first embodiment.

Recording together with the image data of 1 SD frame composed by culling the pixels to one-fourth in the same manner as the second embodiment is done as follows. The Y signal is processed such that 1 HD frames are culled horizontally and vertically by every other pixel in the same manner as in the second embodiment. Cr, Cb signals are processed such that the pixels are only horizontally reduced to one-fourth. Consequently, the Y signal comprises 640 × 504 pixels, and the Cr, Cb signals comprise 160 × 504 pixels. Other processes remain the same as in the second embodiment.

In this third embodiment as described above, when the HDS signal, in which the pixels of the Cr, Cb signals, which are horizontally and vertically one-half of that of the Y signal, are recorded through the VCR unit 2 based on a 4:1:1 ratio, the 16 × 16 pixels of the Y signal corresponding to the 8 × 8 pixels of chrominance signal are sorted again by units of blocks (8 × 8 pixels) consisting of 32 × 8 pixels. Therefore, the 8 × 8 pixels of the chrominance signal of an HDS signal and the corresponding Y signal 16 × 16 pixels are paired. This pair coincides with a macro-block during compression at the VCR unit 2, thus providing excellent reconstruction.

### FOURTH EMBODIMENT

In the fourth embodiment of the present invention, another method of dividing 1 HD frame, different from the one used in the first embodiment, is used.

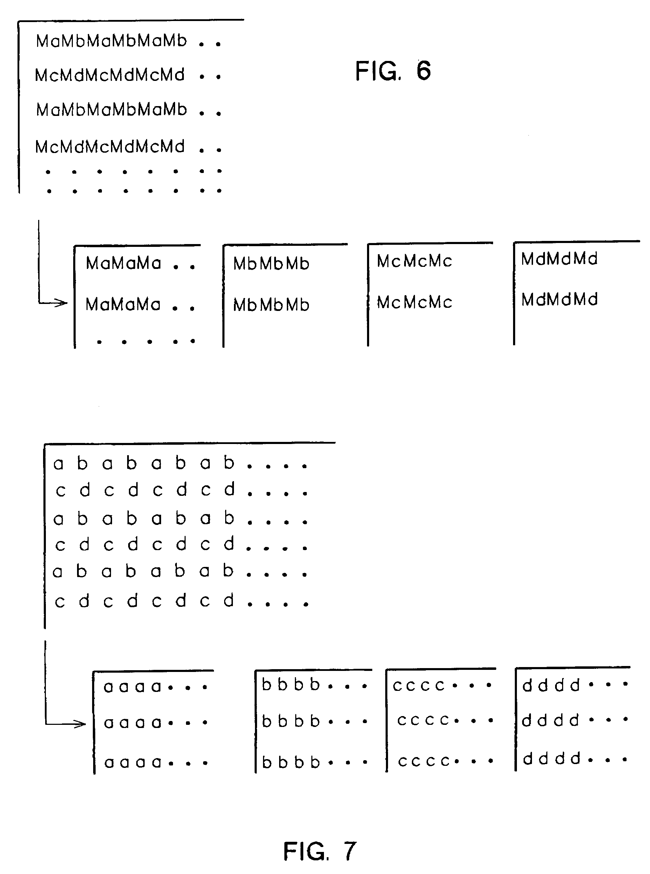

In this embodiment, as shown in Figure 6, 1 HD frame is converted into the image data of 4 SD frames by taking out every other block horizontally and vertically by units of macro-blocks (Ma, Mb, Mc, and Md). The macro-blocks are, as shown in Figure 8, composed of a total of 6 DCT blocks: four DCT blocks of a Y signal and one DCT block of each of the Cr and Cb signals. In other words, the Y signal is divided into units of 8 × 8 pixels, and the Cr, Cb signals are divided into units of 32 × 8 pixels.

Except for the above, the other processing remains the same as in the first embodiment.

Dividing in such a manner has an advantage that the image content can be confirmed by a fast search playback when searching the recorded content on a monitor used for SD signals. This is because the borders of macro-blocks which constitute each SD frame are not successive, but the entire screen areas are included within the range of the number of pixels of an SD signal.

Also, since a unit is a macro-block, a high correlation between the pixels in the macro-block can be utilized for compression processing at the VCR unit 2, providing a further advantage.

### FIFTH EMBODIMENT

In a fifth embodiment of the present invention, the data of an SD frame is related to the sequence number SEQ. No. in the ID code of a SYNC block when recording the SD frame composed by dividing 1 HD frame into four subdivisions as in the first through fourth embodiments.

For example, the data is related as follows: Of the SD frames obtained by dividing 1 HD frame into four, SEQ. No is 0, 4, or 8 for the first SD frame; SEQ. No. is 1, 5, or 9 for the second SD frame; SEQ. No. is 2, 6, or 10 for the third SD frame; and SEQ. No. is 3, 7, or 11 for the fourth SD frame. Since each SD frame is recorded over three track frames, the sequence number to be recorded on a magnetic tape is, for example, 0, 0, 0, 1, 1, 1, 2, 2, 2, 3, 3, 3 for each track frame.

In general, when reproducing at a tape searching speed faster than that when recording, data in a plurality of track frames coexist by the units of SYNC blocks in a regenerated signal because the magnetic head orthogonally crosses the tracks on the tape.

Even in such a case, in this embodiment, the SYNC block can determine what number of SD frame of 4 SD frames it is processing, by reading out the sequence number in the ID code. Also, stored in the ID code is the information (track pair number) indicating to what track number in one track frame the SYNC block belongs, and the sequence number indicating what the SYNC block number is in one track. As described above, since the SYNC block corresponds to a macro-block, the macro-block data in a specific location in the HDS signal can be reproduced by reading out this information. Therefore, even during fast searching, the HD frame can be decoded, and a relatively good playback image can be observed on a monitor for HD signals.

As described above, in this fifth embodiment, when recording the SD frames made by dividing 1 HD frame into four frames on a magnetic tape, the data of the SD frames are related to the sequence number in the ID code of the SYNC block. For this reason, a relatively good playback image can be observed on a high-definition image monitor (HD signal monitor) even during fast searching.

Note that the method of relating the data of SD frame to the sequence number is not limited to the above, but may be carried out as follows.

Since the sequence number is limited to 0 through 11 in the DVC standard, the numbers 12 through 15, which can be recorded in 4 bits, are not used. Therefore, the information may be recorded such that SEQ. No. = 12 for the first SD frame, one of the four obtained by dividing 1 HD frame; SEQ. No. = 13 for the second flame; SEQ. No. = 14 for the third frame; and SEQ. = 15 for the fourth frame. In this case, by reading out the SYNC blocks of SEQ. No. = 12 through 15 during fast search playback, the information can be obtained indicating that the data of the SYNC block is the data, a part of the HD frame, and to what number of the frame of the four SD frames the data belongs. Therefore, even when fast search playing back the tape on which both HDS and SD signals are mixed and recorded, only the HDS signal can be observed relatively excellently on a high-definition image monitor.

### SIXTH EMBODIMENT

In a sixth embodiment of the present invention, another method of dividing 1 HD frame is used, different from that of the first embodiment.

In this embodiment, as shown in Figure 7, each of the Y, Cr, and Cb signals of 1 HD frame is culled every other pixel, horizontally and vertically, to compose image data of 4 SD frames. In Figure 7, a, b, c, and d represent pixels. Except for the above, other processes remain the same as in the first embodiment.

By dividing in such a manner, the same effect as the above-mentioned fourth embodiment can be obtained. That is, the effect that the image content can be determined by a fast playback when searching the recorded content on a monitor for an SD signal. Also, the playback image can be observed on a monitor for SD without much incompatibility. This is because each SD frame has culled pixels, but the entire screen area is covered with the range of pixel numbers in one SD frame. Since the pixels are simply culled, there may be a folding distortion due to sampling. However, this cannot cause a serious visual problem.

As described, in this sixth embodiment, every other pixel in a HD frame is culled horizontally and vertically to compose the image data of 4 SD frames. Therefore, the recorded content can be searched by normal and fast playback and observed on a monitor for SD signals in the same manner as when recording a still picture of SD signals.

### SEVENTH EMBODIMENT

A seventh embodiment of the present invention uses different methods from those in the first through sixth embodiments, for composing SD flames by dividing an HD frame and for recording the data on a magnetic tape.

In this embodiment, each SD frame, made by dividing 1 HD frame into four subdivisions, is recorded over 4 track frames. For this reason, the four identical SD frames are successively applied to the VCR unit 2, shown in Figure 1, from the image signal switching process section 1. At that time, the first two SD frames are composed the same as in the above-mentioned embodiments, but the next two SD frames are rearranged such that 48 pixels at top are switched to 48 pixels at bottom for every 96 vertical pixels of SD frame. The 48 pixels are the vertical pixel number of the super-block shown in Figure 9. The above switching process corresponds to a process of alternating the vertically adjacent super-blocks.

As mentioned before, the DVC standard requires that one entire row in a super-block is recorded in 1 track. Therefore, by alternating the vertically adjacent super-blocks, the data recorded in each track is also alternated in the neighboring tracks. The neighboring tracks are recorded/repro duced by magnetic heads having different azimuths so that the following effect can be obtained.

When the error ratio in playback data during recording or playback is increased due to one blinded magnetic head, most of the data in the entire horizontal row in a super-block may sometimes be lost. In such a case, since the first two of the four track frames are not alternated, the relationship between the super-block and the magnetic head stays the same and the identical super-blocks cannot be recorded or reproduced for two track frames. On the other hand, in the last two track frames in which an alternating process is performed, the relationship between the super-block and the magnetic head is different from that for the first two track frames. Therefore, the data of the superblock which was not recorded/reproduced by the first two track frames can be recorded/reproduced.

In this manner, of the four track frames that comprise 1 SD frame, the pixel data of the identical super-blocks in the first two track frames and the last two track frames are respectively recorded by magnetic heads having different azimuths in this seventh embodiment. For this reason, even when one of the magnetic heads is blinded, excellent regenerated HDS signals can be provided.

### EIGHTH EMBODIMENT

In an eighth embodiment of the present invention, the number of track frames, in which 1 SD frame is made by dividing 1 HD frame as in the first through seventh embodiments, is made variable.

In the first embodiment, the image data of 1 SD frame, one of the four frames obtained by dividing 1 HD frame, is recorded over three track flames. However, when recording plural HD frames successively in a short time interval, there may be a problem in that it may take too long for 1 HD frame to be recorded over 12 track frames. Therefore, the number of track frames over which 1 SD frame is recorded is changed according to the recording time interval. In other words, when recording in a short time interval (shorter than T1, a first given time interval), 1 SD frame is recorded in only one track frame. When recording successively in a relatively long interval [longer than T1, the first given time interval but shorter than T2, a second given time interval (>T1)], 1 SD frame is recorded over two track frames; when successively recording in a longer time interval (longer than T2, the second given time interval), 1 SD frame is recorded overs three track frames.

By varying the number of track frames in which 1 SD frame is recorded in this manner, plural HD frames can be successively recorded in the short time interval, and therefore, a still picture can be successively produced in the short time interval.

Note that one SD frame is not necessarily recorded successively over two or three track frames. It may be recorded such that the four SD frames made by dividing one HD frame is recorded for each track frame one by one, repeating this process two or three times. In this case, reconstruction (or "concealment") is performed using the second HD frame memory 16.

### NINTH EMBODIMENT

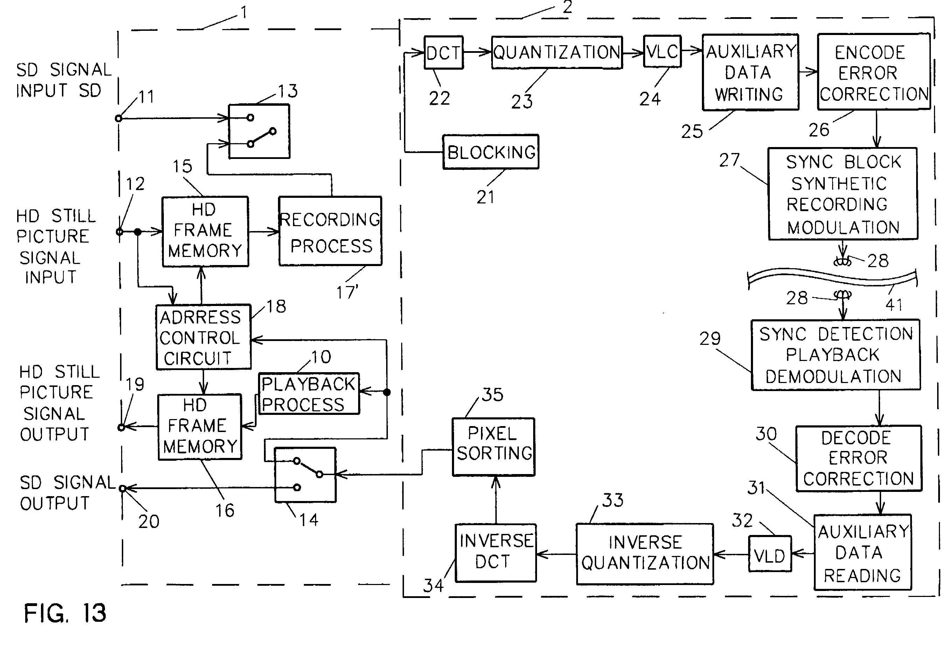

Figure 13 is a block diagram that shows the composition of the digital image signal recording/playback apparatus of a ninth embodiment of the present invention. This system is similar to the system of Figure 1 and comprises an image signal-switching processor 1 and an image signal recording/playback unit 2. The elements of Figure 13 having the same function as those of Figure 1 are identified by the same numerals and description of such elements need not be completely repeated for Figure 13.

The image signal-switching processor 1 is composed of the following main components: an input terminal 11, through which digitized SD signals are applied; an input terminal 12, through which digitized, high-definition, high-gray scale still-image signals (hereinafter "HDS signals") are applied; an output terminal 19, from which regenerated HDS signals are output; an output terminal 20, from which regenerated SD signals are output.

Processor 1 also includes first and second switching circuits 13 and 14 that switch SD and HDS signals; first and second frame memory units 15 and 16 that store HDS signals in units of frames; a recording processing circuit 17' that converts the numbers of data bits and inserts dummy data; a playback processing circuit 10 that performs reverse bit count conversions in a direction opposite to the conversion performed during data recording and that removes dummy data; and an address control circuit 18 that controls the addresses of the first and second frame memory units 15 and 16 during the data read/write processes.

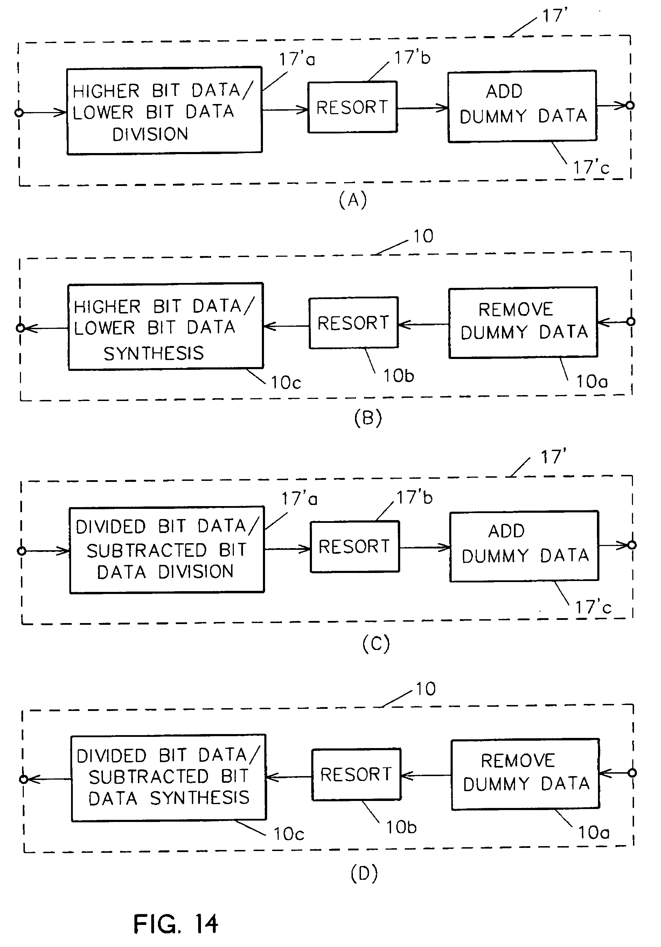

As shown in Figure 14(a), the recording processing circuit 17' comprises the following components: a high/low bit data-splitting circuit 17a that divides the input 10-bit data into high- and low-bit data and converts each of the subdivisions into 8-bit data; a sorting circuit 17b that sorts high- and low-bit data; and a dummy data add-on circuit 17c that adds dummy data. Similarly, the playback processing circuit 10 comprises the following components as shown in Figure 14(b): a dummy data-removing circuit 10a that removes the dummy data that was added in the recording process; a sorting circuit 10b that sorts data in reverse of the sorting that was performed in the recording process; and a high/low bit data-composition circuit 10c that converts the high/low bit data that was split during the recording process to generate 10-bit data.

In this ninth embodiment an HDS signal is composed of the three primary colors G, B, R. Each signal contains 1280 effective pixels in the horizontal direction; the number of effective lines in the vertical direction is 1024 lines per frame (hereinafter a frame containing HDS signals is called an "HD frame"). An HDS signal contains 10 quantized bits so that each piece of pixel data represents a numerical value 4 through 1020.

The HDS signal that is input to the processor 1 is supplied to the first HD frame memory 15, and HDS signals corresponding to one HD frame are stored in the first HD frame memory 15. As explained previously, the address control circuit 18 controls the addresses read from the HD frame memory 15 and sorts the pixels for HDS signals. The HDS signals that were read from the HD frame memory 15 are supplied to the first switching circuit 13 via the recording processing circuit 17'. The first switching circuit 13 switches SD signals with the HDS signals in which pixels have been sorted and supplies the results to the blocking circuit 21 in the image signal recording/playback unit 2.

The image signal recording/playback unit 2 in this embodiment also comprises a VCR based on the DVC standard. The image signal recording system of the VCR unit 2 comprises the following principal components: a blocking circuit 21 that blocks data for DCT computation; a DCT circuit 22 that performs DCT computations; a quantization circuit 23 that performs quantization; a VLC (variable-length coding) circuit 24 that performs variable-length encoding; an auxiliary data write circuit 25 that writes data to subcode sectors and adds video AUX data; an error correction encoding circuit 26 that adds parity bits for error correction; a sync block synthesis/recording modulation circuit 27 that synthesizes sync blocks and modulates data in order to record the data on magnetic tape; and a magnetic head 28 that records data on the magnetic tape 41. The image signal playback system comprises the following principal components: a magnetic head 28 that plays back data from magnetic tape 41; a SYNC detection playback demodulation circuit 29 that detects and demodulates sync blocks; an error correction decoding circuit 30 that performs error corrections based on parity-bit information; an auxiliary data read circuit 31 that reads data from subcode sectors as well as video AUX data; a VLD (variable-length decoding) circuit 32 that performs variable-length decoding; an inverse quantization circuit 33 that performs reverse quantization; an inverse DCT circuit 34 that performs inverse DCT computations; and a pixel-sorting circuit 35 that sorts pixels.

Output signals from the pixel-sorting circuit 35 for the VCR unit 2 are applied to the second switch 14 of the image signal-switching processor 1. If the regenerated signal is an SD signal, the second switching circuit 14 outputs the results to the SD signal output terminal 20 side. If the regenerated signal is an HDS signal, the second switching circuit outputs the results to the second HD frame memory 16 through the playback processing circuit 10. When regenerating an HDS signal, the address control circuit 18 controls the write addresses in the HD frame memory 16 so that the pixels that were sorted during the recording process are put back in their original sequence. The address control circuit 18 also controls read addresses so that the data representing one HD frame is output in the order in which they were input during the recording process.

The following explains how HD frames are divided in this embodiment and how the number of pixel data bits is converted when HDS signals are recorded. The process described below is performed by the address control circuit 18, the frame memory 15, and the recording processing circuit 17'.

Input HDS signals are stored in the HD frame memory 15. They are divided into 16 portions in the screen region. The results are converted so that the pixel signals for the divided area correspond to one frame (one SD frame) of image signals representing SD signals. The results are applied to the VCR unit 2.

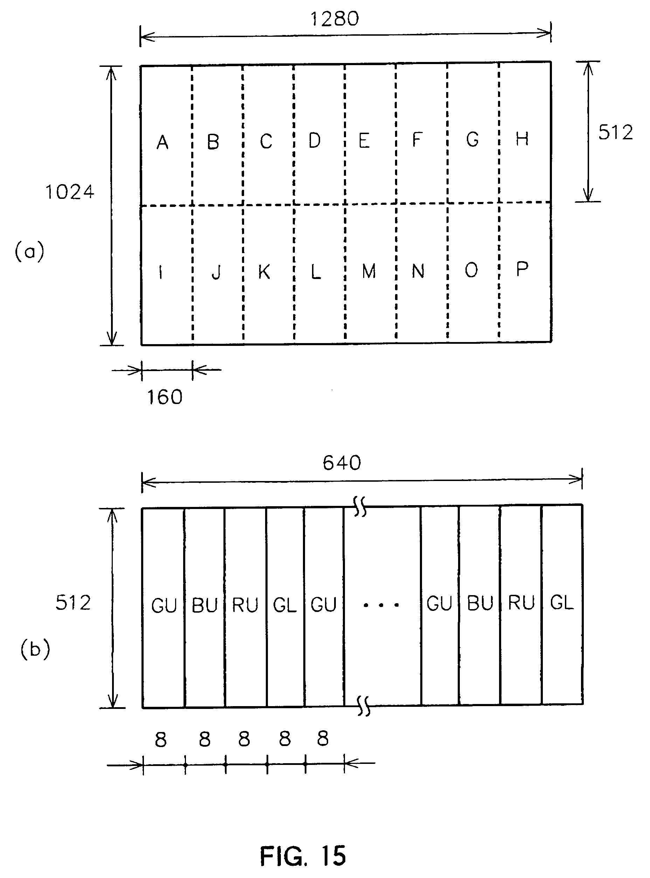

Figure 15(a) describes how HDS signals are divided into 16 portions. G (green) signals from one HD frame are divided into 8 portions horizontally and 2 portions vertically. The areas A - P that have been obtained by the splitting are composed of 160 horizontal pixels × 512 vertical pixels. The B (blue) and R (red) signals are also divided in a similar manner.

In the next step, 8 horizontal pixels for the G signal in region A are extracted and the highest 8 bits of each pixel data are laid out as 8 horizontal pixel data for the Y (luminance) signal of the SD signal. Thus, a requantization is performed by truncating the lowest 2 bits of the 10 bits. The results are converted into high-bit data of 8 bits and are laid out as pixel data for the Y signal. All pixel data take values 0 through 255. In the next step, 8 horizontal pixels for the B signal in region A are extracted and the high 8 bits of pixel data are laid out as 8 horizontal pixel data for the Y signal of the SD signal.

Similarly, in the next step, 8 horizontal pixels for the R signal in region A are extracted and the high 8 bits of pixel data are laid out as 8 horizontal pixel data for the Y signal of the SD signal.

In the next step, the low 4-bit data for the 8 horizontal pixels of the G signal are extracted. This process is equivalent to subtracting requantized data, obtained by setting all low 4 bits of the original 10-bit data to zeros, from the original 10-bit data. Four bits of zeros are appended to the high-bit side of the resulting 4-bit data to generate 8 bits, and the value "16" is added to the 8-bit data. The resulting pixel data (low-bit data) are laid out as horizontal 8-pixel data for the Y signal of the SD signal. Since the resulting pixel data are derived from 4-bit data, the pixel data take a value 16 through 32.

The above process is repeated through bit 640 in the horizontal direction, and the same process is performed over 512 vertical lines. As a result, the original data are converted into image data composed of 640 horizontal pixels × 512 vertical pixels. This is shown in Figure 15(b). In the figure each piece of pixel data contains 8 bits. The codes GU, BU, and RU denote, respectively, the high-bit data for the G, B, and R signals. Similarly, the code "GL" denotes the low-bit data for the G signal. It should be noted that in Figure 15(b) the number of pixels displayed is not in exact proportion to the size of a pictorial representation in the drawing. The size has been enlarged for clarity. This observation is also applicable to the other embodiments.

Further, four bits of zeros are appended to the high-bit side of the low four bits of the B signal to generate 8 bits, and the value 128 is added to the 8-bit data to convert the results into low-bit data of 8 bits. The resulting low-bit data is laid out as horizontal 8-pixel data for the Cr signal of the SD signal. This process is repeated horizontally and vertically to convert the original data into image data containing 160 horizontal pixels × 512 vertical pixels.

Similarly, four bits of zeros are appended to the high-bit side of the low four bits of the R signal to generate 8 bits, and the value 128 is added to the 8-bit data to convert the results into low-bit data of 8 bits. The resulting low-bit data is laid out as horizontal 8-pixel data for the Cb signal of the SD signal. This process is repeated horizontally and vertically to convert the original data into image data containing 160 horizontal pixels × 512 vertical pixels.

One SD frame of Y signals is composed of 270 horizontal pixels × 480 vertical pixels. Similarly, one SD frame of Cr and Cb signals each is composed of 180 horizontal pixels × 480 vertical pixels. Thus, because the image data produced by the processing described above do not directly correspond to one SD frame, pixels are rearranged and dummy data must be inserted as follows:

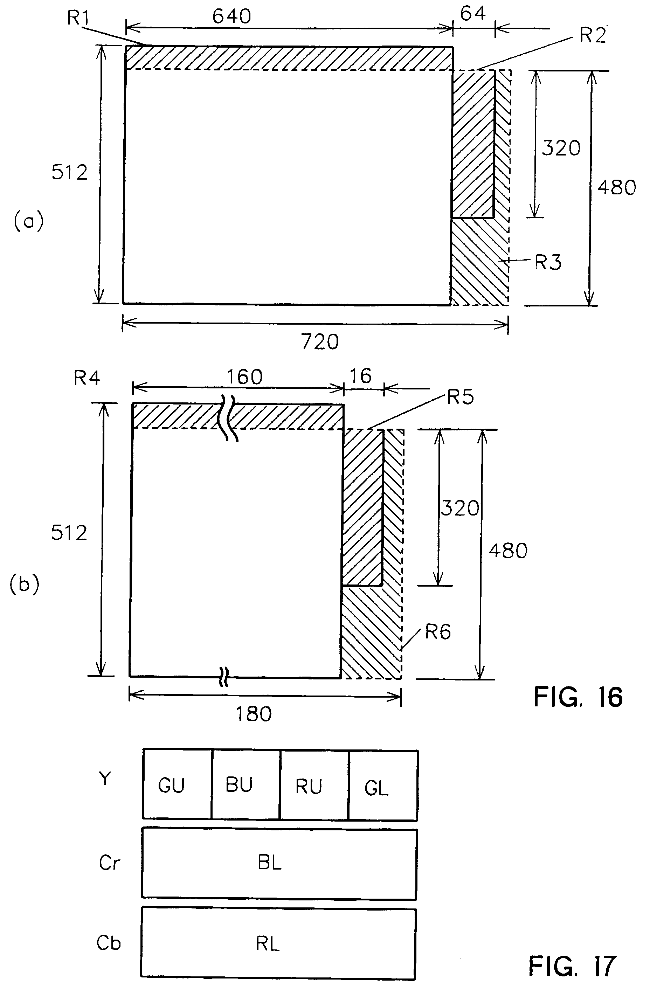

With regard to Y signals, as shown in Figure 16(a), the area composed of 640 horizontal pixels × 512 vertical pixels is associated with the SD frame so that the left and bottom edges of the area coincide, respectively, with the left and bottom edges of the SD frame. The pixels (640 horizontal pixels × 32 vertical pixels) in the top overflow area R1 are transferred to the right-side periphery area R2 of the SD frame (64 horizontal pixels × 320 vertical pixels). For this operation, an area consisting of 8 horizontal pixels × 8 vertical pixels is treated as the smallest unit, and, as much as possible, the pixels are moved in those units. Further, in area R3, to which a right-declining hatching is assigned, dummy data in which all values are "16" are stored. This produces the Y signals of one SD frame.

With regard to the Cr and Cb signals, as shown in Figure 16(b), the area composed of 160 horizontal pixels × 512 vertical pixels is associated with the SD frame for chrominance signals so that the left and bottom edges of the area coincide, respectively, with the left and bottom edges of the SD frame. The pixels (160 horizontal pixels × 32 vertical pixels) in the top overflow area R4 are transferred to the right-side periphery area R5 of the SD frame (16 horizontal pixels × 320 vertical pixels). For this operation, an area consisting of 8 horizontal pixels × 8 vertical pixels is treated as the smallest unit, and, as much as possible, the pixels are moved in those units. Further, in area R6, to which a right-declining hatching is assigned, dummy data in which all values are "128", are stored. This produces the Cr and Cb signals of one SD frame.

The above process is performed on areas A through P with the result that HDS signals of one frame are converted into SD signals of 16 frames and are applied to the VCR unit 2.

The recording, system of the VCR unit 2 performs DCT operations, quantization, and variable-length encoding based upon the DVC standard described previously. The present ninth embodiment, which involves the conversion of image data as described above, produces macro-blocks as configured in Figure 17. The blocks of Y signals that make up a macro-block comprise the high-bit data for G, B, and R signals and the low-bit data for G signals. The blocks of Cr and Cb signals comprise, respectively, the low-bit data for B signals and the low-bit data for R signals. Therefore, all image data that correspond to a given position on the screen are contained in one macro-block.

Further, in this embodiment a special process for treating HDS signals is performed as described below, with the result that image data are recorded on magnetic tape. Since, according to the DVC standards, image data for one SD frame are recorded on a split basis in 10 tracks, a group of 10 tracks is called a "track frame". Thus, one HD frame is recorded in 16 track frames.

The subcode sector for a track frame, which is an auxiliary information recording area for the track frame, records information indicating that some of the 16 divisions of one HD frame are recorded in the track frame, information indicating what specific parts of the HD frame are recorded, information indicating the number of pixels of Y signals and chrominance signals, and information indicating the aspect ratio that is employed. This processing is performed by the auxiliary data write circuit 25 of Figure 13.

The processing that is performed by the playback system of the VCR unit 2 of Figure 1 is similar, to that of Figure 13. Data that are recorded on magnetic tape are played back and demodulated to become columns of digital data. Detection of the SYNC word (Figure 11) from these data columns results in one sync block of data. On the playback data thus obtained, error detection and correction routines are performed in the sync block using an inner parity. On video data, error detection and correction routines are performed in the sync block using an outer parity in addition to the inner parity. Subsequently, auxiliary information is read in unit 31, and variable-length decoding (the inverse of the variable-length encoding), inverse quantization, and inverse DCT computations are sequentially performed in units 32, 33, and 34, respectively. The data is then re-sorted to their original pixel layout and are output to the second switching circuit 14 of the image signal-switching processor 1.

As noted above, this processing is common to both SD and HDS signals. During the playback of HDS signals, the auxiliary data read circuit 31 reads the data in the subcode sector, and obtains the requisite information, such as which parts of one HD frame are recorded in the track frame. This information pertaining to the HDS signal is supplied to the image signal-switching processor 1.

The playback processing circuit 10 of the image signal-switching processor 1 removes any dummy data that were assigned during the recording process, re-sorts the data opposite to the sorting order produced during the recording process, and synthesizes high- and low-bit data as will be described below.

First, with regard to the high-bit data (8 bits) for the G, B, and R signals, the low 2 bits are truncated in order to requantize the data to 6-bit data. The reason for the truncation is to eliminate any influence of quantization noise that could occur when DCT coefficients are quantized. In most cases, the high 6 bits are not affected by quantization noise.

With regard to the low-bit data for G signals, first the value "16" that was added during the recording process is subtracted. If the result is greater than "15", the value is set to "15"; if the result is less than "0", the value is set to "0". Subsequently the low 4 bits are extracted. These bits are appended to the low-bit side of the high 6 bits that were requantized, thus producing 10-bit data.

Similarly, with regard to the low-bit data for the R and B signals, first the value "128" that was added during the recording process is subtracted. If the result is greater than "15", the value is set to "15"; if the result is less than "0", the value is set to "0". Subsequently, the low 4 bits are extracted. These bits are appended to the low-bit side of the high 6 bits that were requantized, thus producing 10-bit data. This process is equivalent to the addition of the high-bit data to the low-bit data.

The data in all of the areas that were divided into 16 subdivisions is processed in this manner. The data are stored in frame memory 16 and, simultaneously, are read from HD frame memory 16 as data for one HD frame. The aspect ratio for the images thus read is determined by referencing the information that is recorded in the subcode sector. Playback HDS signals are obtained in this manner.

In this embodiment, the first switching circuit 13 is switched by the user when the user selects either recording of SD signals or recording of HDS signals. The information indicating either SD signal recording or HDS signal recording, as the case may be, is supplied to a controller (not shown in the figure). The controller then performs switching control on the various units when the VCR unit 2 performs recording. For playback, the same controller determines whether a given signal is an SD signal or an HDS signal, based upon the information read by the auxiliary data read circuit 31, and performs switching control on the switching circuit 13 and the other units.

In this ninth embodiment of the present invention, 10-bit G, B, and R signals are split and converted into high-bit data obtained by requantizing them into respective high 8-bit data and into low 8-bit data. The low 8-bit data are obtained by requantizing by setting all low 4 bits of the 10-bit data to zeros, by subtracting the results from the original 10 bits, by assigning zeros to the high bits of the resulting 4 bits, and by adding a fixed number (either "16" or "128"). The converted data are placed in a DCT block of 8 horizontal and 8 vertical pixels, and are recorded and played back as the Y, Cr, and Cb signals of the SD signals. This permits a highly efficient compression that preserves the correlation with the original image signals. The result is a low-cost implementation of an image signal recording/playback apparatus capable of recording and playing hack still image signals with a large number of quantizatation bits (a large degree of gray scale) with a high degree of definition.

Because, during the playback process, the low-bit data are added after the low 2 bits of the high-bit data are eliminated by requantization, the 10-bit data thus obtained have a value sufficiently close to the original data. This allows recording and playing back that retains a gray scale precision of 8 bits or greater.

Because the DCT block for the high-bit data and the DCT block for the low-bit data associated with the same position on the screen and representing G, B, and R signals are contained in the same macro-block, the coefficients that are at least lower in order than the DCT coefficient obtained by a DCT transform of a DCT block are placed in the same sync block (due to the fact that packing to the sync block is performed sequentially with the data associated with the lowest-order coefficient being packed first to the sync block). Consequently, if one sync block is lost due to an uncorrectable error during a playback, the effect on the playback screen is confined to a DCT block consisting only of 8 horizontal and 8 vertical pixels. In this manner, any adverse visual effects of a lost sync block can be minimized.

Although in the above ninth embodiment the requantization during the extraction of high bits from input data is performed by truncation, the apparatus incorporating the principles of the present invention is not limited to this technique. It is possible to perform requantization by rounding or by referencing one low bit. For example, when requantizing input data to high 6 bits, if the seventh bit is "1", "1" is added to the least significant bit (LSB) of the high 6 bits, and nothing is added otherwise. If low 4-bit data are obtained by subtracting the high 6-bit data that were obtained by performing this process during the recording process from the original data, when requantizing high-bit data into 6 bits during playback, the high-bit data should be rounded to 6 bits by referencing the next low bit.

It is clear that the number of requantized bits is not limited to 6 bits.

Similarly, the HDS signals to be recorded are not limited to 1280 horizontal pixels × 1024 vertical pixels; they may be HDS signals consisting of 1920 horizontal pixels × 1036 vertical pixels. Further, the HDS signals that can be processed are not limited to those composed of the three primary colors G, B, and R; they can be HDS signals consisting of Y signals and chrominance signals as utilized in the earlier described embodiments.

It is not necessary that the screen area be divided equally; nor does it need to be divided into 16 parts. For example, an area consisting of 1920 horizontal pixels × 1036 vertical pixels may be divided into 24 parts.

Further, the value of the dummy data to be stored in the unused portion of an SD frame need not be limited to "16" or "128"; any data may be used as long as they have the same value in the DCT block (8 horizontal and 8 vertical pixels) on which DCT operations are performed.

### TENTH EMBODIMENT

The image signal recording/playback apparatus of a tenth embodiment of the present invention is basically the same as that used in the ninth embodiment. However, the recording processing circuit 17' and the playback processing circuit 10 are configured as shown in Figures 14(c) and 14(d). Specifically, instead of the high-bit/low-bit division circuit 17'a and the high-bit/low-bit synthesis circuit 10c of the ninth embodiment, a division bit data/subtraction bit data split circuit 17'd and a division bit data/subtraction bit data synthesis circuit 10d are provided.

In this embodiment an input HDS signal is composed of a Y signal and two chrominance signals (Cr and Cb signals). A Y signal has 1280 effective pixels in the horizontal direction and 1024 effective lines in the vertical direction in the HD frame. The Cr and Cb signals are digital signals having 640 horizontal pixels × 1024 vertical pixels each. The number of quantization bits is 9, and each piece of image data represents a numerical value "2" through "509".

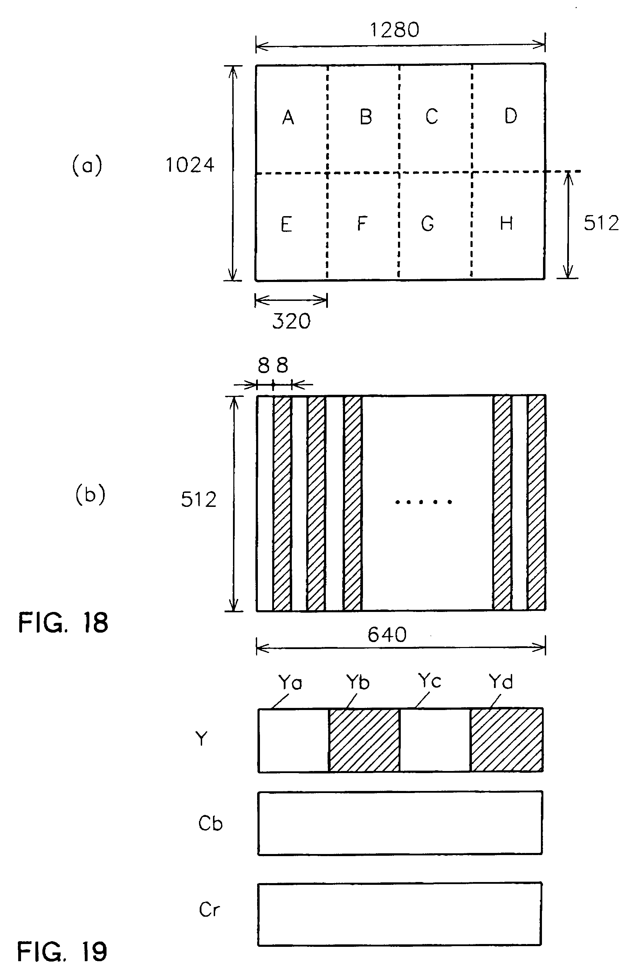

In this tenth embodiment, one HD frame is divided into 8 parts in the screen area to convert the data contained in the HD frame into image data of 8 SD frames. Specifically, as shown in Figure 18(a), a Y signal is divided into 4 parts in the horizontal direction and 2 parts in the vertical direction. Each of the areas A through H, resulting from the splitting, consists of 320 horizontal pixels × 512 vertical pixels.

Subsequently, 8 pixels are extracted in the horizontal direction from the split area, and 9-bit data are divided by 2. In this embodiment, the division by 2 is performed by shifting the 9-bit data to the right by 1 bit to change the data into 8-bit data. Hereinafter the data obtained by division is called "division bit data." Then, 8-bit data is obtained by subtracting the division bit data from the original 9-bit data. Hereinafter the data obtained by division is called "subtraction bit data". Then, 8 pixels of division data and 8 pixels of dummy data are placed alternately. This process performed on 320 horizontal pixels × 512 vertical pixels yields image data consisting of 640 horizontal pixels × 512 vertical pixels as shown in Figure 18(b) (the areas with cross-section lines are the ones in which dummy data are stored). In this process all dummy data have the value "16". The same process is also performed on the subtraction bit data, thus producing image data composed of 640 horizontal pixels × 512 vertical pixels.

In the next step, as in the ninth embodiment, the image data consisting of 640 horizontal pixels × 512 vertical pixels are sorted, and dummy data in which all values are "16" are inserted. The result is the conversion into image data composed of 720 horizontal pixels × 480 vertical pixels. In this manner, each piece of division bit data and subtraction bit data is converted into the Y signal data of one SD frame.

The Cr and Cb signals are also processed in a similar manner. Specifically, a screen area composed of 640 horizontal pixels × 1024 vertical pixels is divided into 4 parts horizontally and 2 parts vertically to create image data of 160 horizontal pixels × 512 vertical pixels. As in the case of the Y signal, the 9-bit data are split into 8-bit division bit data and subtraction bit data. Subsequently, the image data consisting of 160 horizontal pixels × 512 vertical pixels are sorted, and dummy data in which all values are "128" are inserted as shown in Figure 16(b). The result is the conversion of the original image data into image data composed of 720 horizontal pixels × 480 vertical pixels. In this manner, division bit data and subtraction bit data each are converted into the chrominance signal data of one SD frame.

Further, in this tenth embodiment, SD frames composed of subtraction bit data are subjected to the process that moves the image data that represent the lowest two lines of a frame to the top edge (hereinafter the "two-line rotation processing"). This process results in a two-line shifting of an SD frame composed of division bit data and an SD frame composed of subtraction bit data.

The above process is performed on areas A through H of Figure 18(a) by the image signal-switching processor 1 with the result that the data are converted into image data of 16 SD frames and are applied to the VCR unit 2.

The process that takes place in the VCR unit 2 is the same as in the ninth embodiment. Because in the present embodiment there is a two-line shift between the data in a frame composed of division bit data and the data in a frame composed of subtraction bit data, as described above, the pixel data in the DCT block also become pixel data that have been shifted by two lines. Also, as described above, because in this embodiment image data are converted, the resulting macro-block has the configuration shown in Figure 19. Specifically, the blocks for Y signals that comprise a macro-block comprises two blocks (Ya, Yc) of either the division bit data or the subtraction bit data of the Y signals of the HDS signals, and two dummy data blocks (Yb, Yd). The blocks of Cr and Cb signals are composed, respectively, of blocks of the division bit data and subtraction bit data of the Cr and Cb signals that occupy the same screen positions as the Y signals of the HDS signals. Thus, the image data that are associated with the same position on the screen are all contained in one macro-block.

In this embodiment, the subcode sector for a track frame, which is an auxiliary information recording area for the track frame, records information indicating that some of the 8 divisions of one HD frame are recorded in the track frame, information indicating what specific parts of the HD frame are recorded, information indicating the number of pixels of Y signals and chrominance signals, and information indicating the aspect ratio that is employed.

For playback, a reverse of the recording process is performed as in the case of the ninth embodiment. In the present embodiment, the division bit data are added to the corresponding subtraction bit data to restore 9-bit data. The results are stored in frame memory 16 of Figure 13.

Although division bit data and subtraction bit data are nearly identical, between a frame composed of division bit data and one composed of subtraction bit data there is a two-line shift in the pixels that make up a DCT block. Due to this fact, any quantization noises that are generated as a result of DCT operations, quantization, inverse quantization, or inverse DCT operations differ between these pixels. Consequently, even though the addition of division bit data and subtraction bit data produces a nearly twofold increase in signal components, quantization noise components do not necessarily double. In this way, the effects of quantization noise can be reduced in relative terms.

If either division bit data or subtraction bit data, but not both, are lost due to an uncorrectable error during a playback, the data that were not lost are multiplied by 2 to convert them into 9-bit data. Although this results in a degraded picture quality due to the doubling of quantization noise, it can prevent total loss of some of the screen data.

As described above, in this tenth embodiment, 9-bit image data are split into 8-bit division bit data and subtraction bit data, and the division bit data and the subtraction bit data each are laid out as DCT blocks of 8 horizontal pixels × 8 vertical pixels. This permits a highly efficient compression that preserves the correlation with the original image signals. The result is a low-cost implementation of an image signal recording/playback apparatus capable of recording and playing back still-image signals with a number of quantization bits (a large degree of gray scale) larger than SD and SD signals with a high degree of definition.

Because a two-line rotation process is performed that shifts pixels by 2 lines using SD flames composed of division bit data and those composed of subtraction bit data, and the original 9-bit data are restored during playback by adding the division bit data to the subtraction bit data, it is possible to reduce the effects of quantization noise. This results in 9-bit regenerated data that sufficiently approximate the original 9-bit data and permit recording and playing back of data that retains a gray scale precision of 8 bits or greater.

Because all DCT blocks for the division bit data or subtraction bit data corresponding to the same screen position and representing Y, Cb, and Cr signals are contained in the same macro-block, the coefficients that are at least lower in order than the DCT coefficient obtained by a DCT transform of a DCT block are placed in the same sync block. Consequently, if one sync block is lost due to an uncorrectable error during a playback, the effect on the playback screen is limited to a small range. In this manner any adverse visual effects of the lost sync block can be minimized.

If either division bit data or subtraction bit data, but not both, are lost due to an uncorrectable error during a playback, the data that were not lost are multiplied by 2 to convert them into 9-bit data. This prevents total loss of some of the screen data.

Although in this embodiment, 9-bit input data are split into two pieces of 8-bit data, 10-bit input data are split into four 8-bit data. In this case the 10-bit data are first divided by 2 and the results are subtracted from the input data, thus splitting the input data into two pieces of 9-bit data. Subsequently, each of the 9-bit data pieces is split into two, thus creating four pieces of 8-bit data.

8-bit input data can also be processed In this case, both division bit data and subtraction bit data are treated in the same way as the input data. For playback, the division bit data are added to the subtraction bit data and divided by 2, thus generating 8-bit data.

### ELEVENTH EMBODIMENT

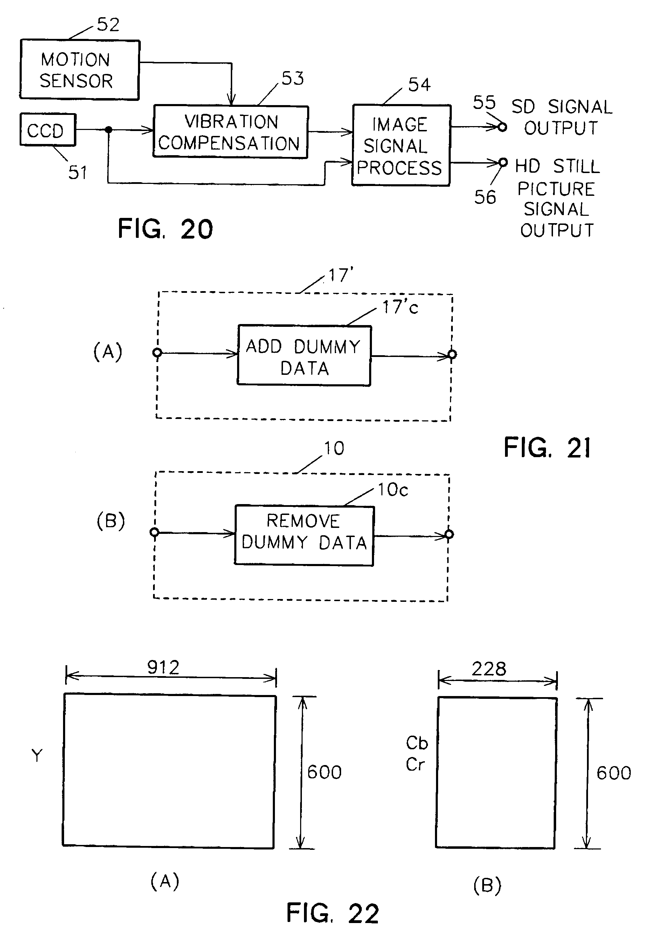

The digital image signal recording/playback apparatus of an eleventh embodiment is created by adding the camera unit shown in Figure 20 to the configuration shown in Figure 13. Further, the recording processing circuit 17' and the playback processing circuit 10 are modified so that they are comprised solely of a dummy data assignment circuit 17'c and a dummy data elimination circuit 10c as shown in Figure 21.

As shown in Figure 20, the camera unit that has been added comprises the following: a CCD (charge-coupling device) 51, which is a camera device; a motion sensor 52, which detects any vibrations of the CCD 51 (hand vibrations);a vibration compensation unit 53, which controls the data read from the CCD 51 to compensate for any vibrations based on the detection signals generated by the motion sensor 52; and an image signal processor 54 that converts the image data transmitted from either the CCD 51 or the vibration compensation unit 53 into either SD signals or HDS signals, which are higher-precision still-image signals than an SD signal. Processor 54 outputs the results to either an SD signal output terminal 55 or an HD still-picture signal output terminal 56. The SD signal output terminal 55 and the HD still-picture signal output terminal 56 are connected to the SD signal input terminal 11 and the HD still picture signal input terminal 12, respectively, as shown in Figure 13.

The CCD 51 contains 912 horizontal pixels × 600 vertical pixels each for the R, G, and B colors.

The following describes the operation of the CCD 51 in the SD signal mode, in which the switching circuits 13 and 14 in Figure 13 are treated as being on the SD signal side.

In this mode the vibration compensation unit 53 selects an area consisting of 720 horizontal pixels × 480 vertical pixels from the 912 horizontal pixels × 600 vertical pixels area of the CCD 51 according to the information on the directions and the magnitudes of the hand vibrations that are detected by the motion sensor 52. The vibration compensation unit 53 outputs the pixel data contained in the selected area to the image signal processor 54. The image signal processor 54 synthesizes Y signals and chrominance (Cr, Cb) signals from the R, G, and B signals, culls the chrominance signals in the horizontal direction so that the results will be one-fourth the original number of pixels, and outputs the results as SD signals.

Such SD signals are input into the VCR unit 2 of Figure 13 through the switching circuit 13 of the image signal-switching processor 1 where ordinary recording and playback are performed.

The following describes the operation of the HDS signal recording mode in which the switching circuits 13 and 14 in Figure 1 are treated as being on the HDS signal side.

In this mode, the image signal processor 54 converts the pixel data composed of 912 horizontal pixels × 600 vertical pixels each for the R, G, and B colors into a Y signal and two chrominance signals (Cr, Cb), culls the chrominance signals in the horizontal direction so that the results will be one-fourth the original number of pixels, and outputs the results as HDS signals from the terminal 56. Thus, as shown in Figure 22, Y signals composed of 912 horizontal pixels × 600 vertical pixels and HDS signals composed of 228 horizontal pixels × 600 vertical pixels of Cr and Cb signals are output and stored in HD frame memory 15 of Figure 13.

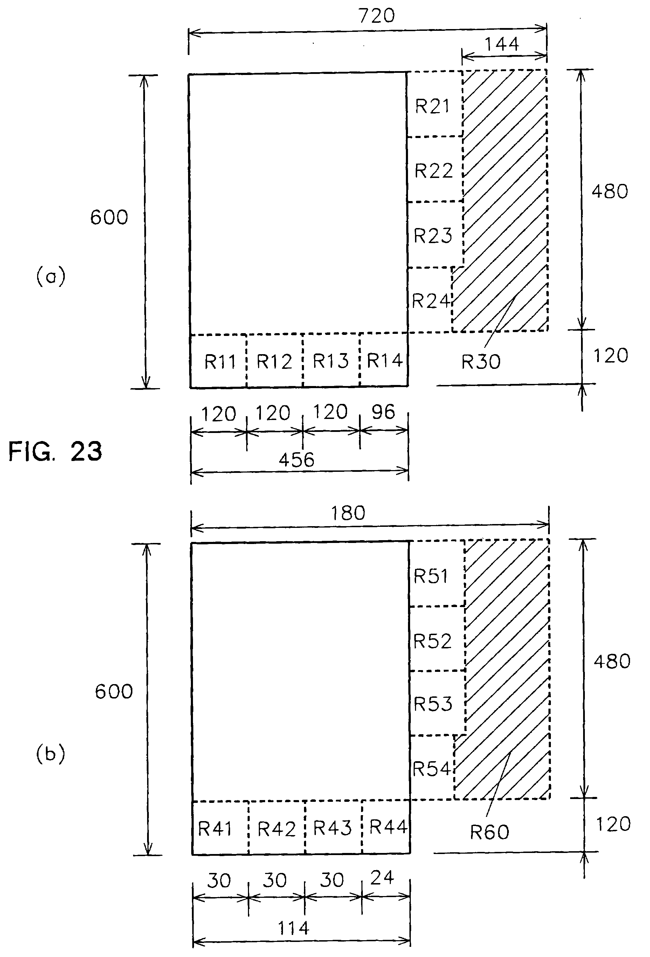

In the next step, the Y signals and the chrominance signals are split into two sections each in the screen area and are converted into 456 horizontal pixels × 600 vertical pixels and 114 horizontal pixels × 600 vertical pixels, respectively. The pixels are sorted and dummy data are inserted as shown in Figure 23, and the pixels are converted into image data of one SD frame. Sorting of pixel data is performed by controlling the read addresses in the HD frame memory 15 of Figure 13.

Specifically, with regard to Y signals as shown in Figure 23(a), the area composed of 640 horizontal pixels × 512 vertical pixels is associated with the SD frame so that the left and top edges of the area coincide, respectively, with the left and top edges of the SD frame; and the bottom overflow area is split into four areas, R11, R12, R13, and R14. These areas are moved, respectively, to the right-side periphery areas R21, R22, R23, and R24 of the SD frame. Further, in area R30, to which a hatching is assigned, dummy data in which all values are "16" are stored. This produces the Y signals of one SD frame.

Color signals are processed in the same way. As shown in Figure 23(b), an area composed of 114 horizontal pixels × 512 vertical pixels is assorted with the SD frame so that the left and top edges of the area coincide, respectively, with the left and top edges of the SD frame; and the bottom overflow area is slit into four areas, R41, R42, R43, and R44. These areas are moved, respectively, to the right-side periphery areas R51, R52, R53, and R54 of the SD frame. Further, in area R60, to which a hatching is assigned, dummy data in which all values are "128" are stored. This produces chrominance signals of one SD frame.

The signals comprising one SD frame thus constructed are applied to the VCR unit 2 of Figure 13. The recording system in the VCR unit 2 performs signal processing according to the DVC standards noted previously. As a comparison between Figures 9 and 23, which describe super-blocks, indicates, the dummy data areas R30 and R60 of Figure 23 represent the data contained in column 4 (j = 4) of a super-block. As noted previously, the video segment, which is a unit of processing of encoding volume control under the DVC standards, is composed of a total of five macro-blocks, which are obtained by extracting one macro-block from each of columns 0 through 4 of the super-block. For this operation the macro-block contained in column 4 of the super-block is constructed so that all DCT blocks comprising the macro-block have the same data value. Therefore, all alternating-current components of the DCT conversion coefficients have the value "0", and they can be compressed into a small data amount by means of variable-length encoding. Therefore, when data must be compressed to fit within a given data amount in the video segment, data from one DCT block can be assigned to other DCT blocks.

In this eleventh embodiment, all DCT blocks that comprise the fourth column in a super-block have the same dummy data value in the DCT blocks. Therefore, data amounts can be assigned to DCT blocks, consisting of image information, in all video segments. Consequently, quantization noise can be eliminated from all DCT blocks composed of image information. This results in a uniform improvement of the overall screen-picture quality during data compression and decompression.

As described above, dummy data are stored in areas R30 and R60 of Figure 23, which are SD frame periphery areas. In this manner DCT blocks, composed of dummy data, are allocated, virtually uniformly, to video segments which are units of processing that are designed to reduce the amount of encoded data to less than a prescribed amount.

In this embodiment, image data are read from HD frame memory 15 in such a way that data from the same SD frame are read successively four times. This process records the image data in 2 SD frames, obtained by splitting and converting one HD frame, on four track frames on magnetic tape.

The VCR unit 2 performs the recording and playback operations in the same way as described in the ninth and tenth embodiments. In this embodiment, information indicating whether the current mode is the SD signal mode or the HDS signal recording mode is supplied to a controller (not shown in the figure), which switches and controls the various components of the VCR unit 2.

During playback, the image signal-switching processor 1 deletes the dummy data and moves pixel data in the reverse direction in which the pixel data were moved during recording. Because data comprising one SD frame are recorded in four track frames, during playback the same data are written four times to a given address in the HD frame memory 16. In this manner, all SYNC blocks can be regenerated unless a given SYNC block is incorrectable in all four track frames.

As described above, the HDS signal recording mode can record and play back still picture signals (HDS signals) that offer a higher definition than SD signals.

This embodiment permits a low-cost implementation of an image signal recording/playback apparatus that uses a CCD 51 that contains a greater total number of pixels than the effective number of pixels in one SD frame and that incorporates a vibration compensation feature for SD signal recording and a feature that records and plays back high-definition still picture signals obtained through the use of the entire effective pixel area of the CCD 51.

Furthermore, because the DCT blocks composed of dummy data are contained in video segments as uniformly as possible during recording, bits can be allocated to DCT blocks not containing dummy data in the video segments. This results in an improved quality of regenerated image signals.

It should be noted that the number of pixels contained in the CCD 51 is by no means limited to 912 horizontal pixels × 600 vertical pixels. Any number may be used so long as it is greater than or equal to 720 horizontal pixels × 480 vertical pixels and in either the horizontal or vertical direction, or both, the number is greater than the number of pixels in an SD frame. It should be noted, however, that a CCD containing only 720 horizontal pixels × 600 vertical pixels can provide vibration compensations only in the vertical direction. Likewise, a CCD containing only 912 horizontal pixels × 480 vertical pixels can provide vibration compensations only in the horizontal direction.

In the HDS signal mode, the splitting of a screen area does not need to be limited to splitting into two sections. The image data for one SD frame obtained by splitting and converting do not need to be recorded in four track frames; they can be recorded in two track frames or one.

### TWELFTH EMBODIMENT

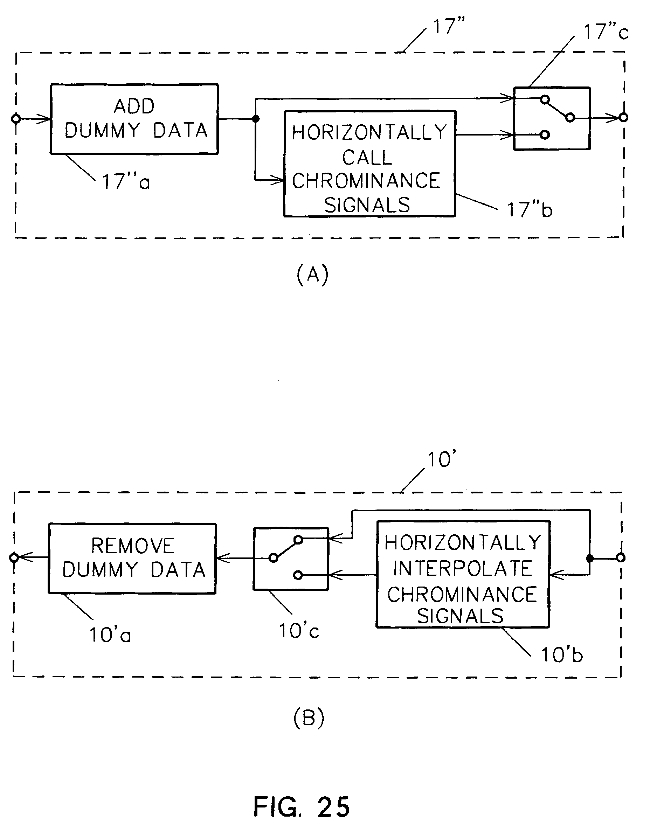

A twelfth embodiment of the present invention also uses the circuit set forth in Figure 13. In this case, however, the HDS signals need not necessarily be high-gray scale still-image signals. Also the recording processing circuit 17' is replaced by a recording processing circuit 17'' as shown in Figure 25 and the playback processing circuit 10 is replaced by a playback processing circuit 10'.

In Figure 25(a), the recording processing circuit 17'' comprises the following components: a dummy data add-on circuit 17''a that adds dummy data; a chrominance signal horizontal thin-out circuit 17''b that culls out horizontal pixels of chrominance signals; and a switching circuit 17''c. Similarly, the playback processing circuit 10' comprises the following components as shown in Figure 25(b): a dummy data-removing circuit 10'a that removes the dummy data that were added in the recording process; a chrominance signal horizontal interpolation circuit 10'b that interpolates the horizontal pixels of the chrominance signals that were culled during recording; and a switching circuit 10'c.

The recording processing circuit 17'' is switchable between a first mode [in which the switching circuit 17''c is at the switching position shown in Figure 25(a)] that divides 1 HD frame into 8 subdivisions and a second mode (in which the switching circuit 17''c is at a switching position opposite to the one in the illustration) that culls and removes horizontal pixels of chrominance signals. Accordingly the playback processing circuit 10' is also switchable between a first mode [in which the switching circuit 10'c is at the position shown in Figure 25(b)] and a second mode (in which the switching circuit 10'c is at a position opposite to the one of the illustration) that interpolates the horizontal pixels of the chrominance signals. These switching circuits are operated by control signals from a control unit (not illustrated).

In the first mode of this twelfth embodiment, the Y signal of the HDS signal consists of 1280 horizontal effective pixels and 1024 vertical effective lines per frame; Cr and Cb signals respectively consist of 640 horizontal pixels (the pixel number after culling the pixels of the Y signal to one-half and the same 1024 vertical lines as the Y signal.

The HDS signal that is applied to terminal 12 is supplied to the first HD frame memory 15 and the address control circuit 18 of Figure 13, and the HDS signals corresponding to one HD frame are stored in the first HD frame memory 15. The control circuit 18 controls the addresses read from the HD frame memory 15 and sorts the pixels for the HDS signals. The HDS signals that were read from the HD frame memory 15 are supplied to the first switching circuit 13 via the recording processing circuit 17''. The first switching circuit 13 switches SD signals with the HDS signals in which pixels have been rearranged and supplies the results to the blocking circuit 21 in the image signal recording/playback unit 2.

Output signals from the pixel-sorting circuit 35 for the VCR unit 2 are applied to the second switch 14 of the image signal-switching processor 1. If the regenerated signal is an SD signal, the second switching circuit 14 outputs the results to the SD signal output terminal 20 side; if the regenerated signals is an HDS signal, the second switching circuit outputs the results to the second HD frame memory 16 through the playback processing circuit 10'. When regenerating an HDS signal, the address control circuit 18 controls the write addresses in the HD frame memory 16 so that the pixels that were sorted during the recording process are put back in their original sequence. The address control circuit 18 also controls read addresses so that the data representing one HD flame are output in the order in which they were input during the recording process.

The following explains how HD frames are divided in the twelfth embodiment and the pixels are sorted when HDS signals are recorded.

Input HDS signals are stored in the HD frame memory 15. They are divided into 8 subdivisions in the screen region. The results are converted such that the image signals for the divided area correspond to one frame (1 SD frame) of image signals representing SD signals. The results are applied to the VCR unit 2.

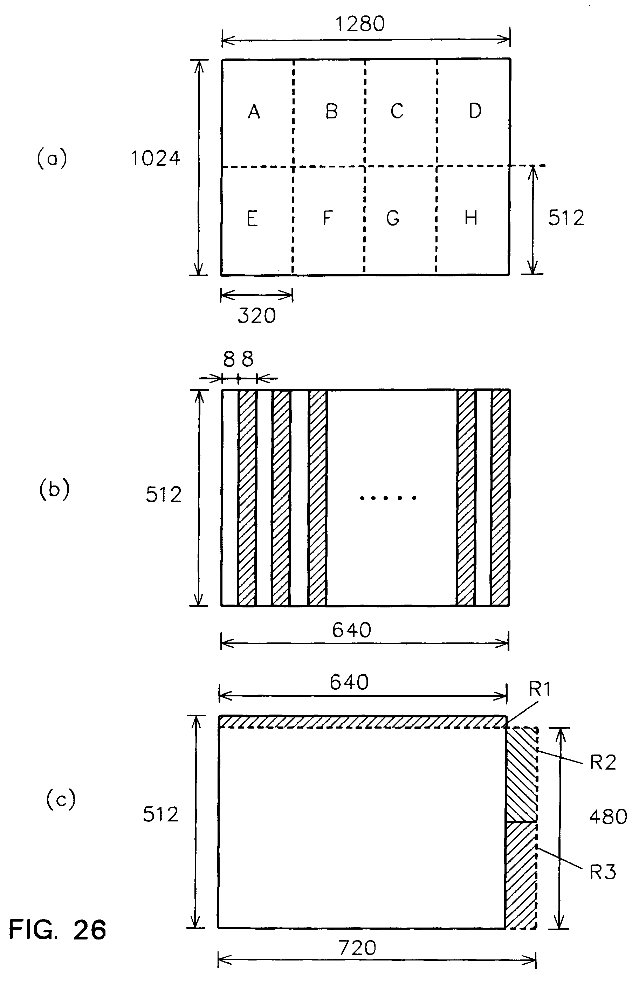

Figure 26 describes how the Y signal is divided into 8 portions in the twelfth embodiment (in which 1 HD frame is divided into 8 portions). 1 HD frame is divided into 8 subdivisions horizontally and 2 subdivisions vertically. Each of the areas A, B, C, D, E, F, G, and H that have been obtained as a result of splitting are respectively composed of 320 horizontal pixels × 512 vertical pixels. One SD frame has 720 horizontal pixels × 480 vertical pixels and each of the regions A through H do not correspond to one SD frame. To compensate this drawback, dummy data are inserted and pixels are shifted in the following manner.

First, in the region divided into 8 subdivisions (horizontal 320 pixels × 512 vertical pixels), 8 pixels of dummy data are inserted, as shown in Figure 26(b) at every 8 pixels, to make a total of 640 horizontal pixels × 512 vertical pixels. Now, values of all dummy data are 16. Note that in Figure 26(b), the width of horizontal 8 pixels is enlarged for clearer illustration purposes.

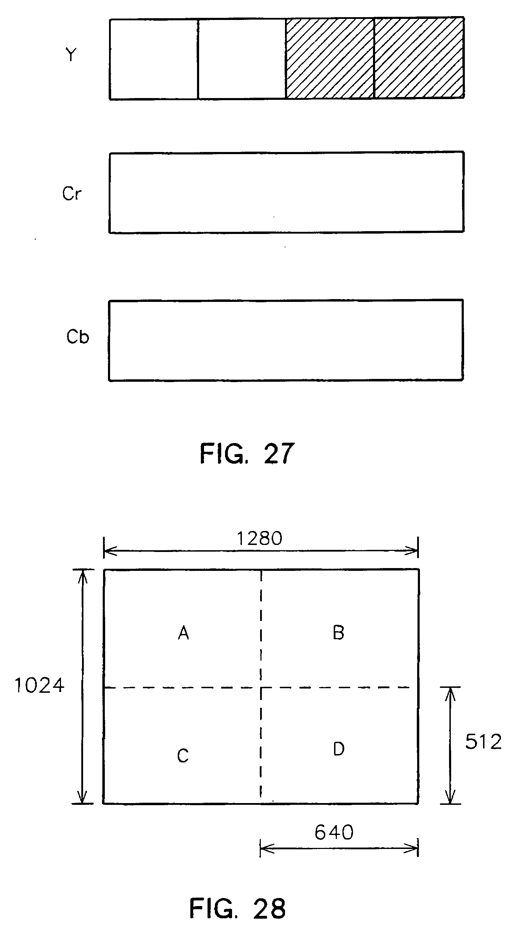

Next, as shown in Figure 26(c), the area composed of 640 horizontal pixels × 512 vertical pixels is associated with the SD frame so that the left and bottom edges of the area coincide, respectively, with the left and bottom edges of the SD frame. The pixels (640 horizontal pixels × 32 vertical pixels) in the top overflow area R1 are transferred to the right-side periphery area R2 of the SD frame (80 horizontal pixels × 256 vertical pixels). For this operation, an area consisting of 8 horizontal pixels × 8 vertical pixels is treated as the smallest unit, and, the pixels are moved in those units as much as possible. For the Y signal, a macro-block consists of 32 horizontal pixels x 8 vertical pixels as shown in Figure 27. Therefore, the pixels are moved by this unit. Two blocks in Figure 27 to which hatching is assigned, in the four DCT blocks of the Y signal, are used for dummy data.

Further, in Figure 26(c) in area R3 of the SD frames (80 pixels × 224 pixels), which is shown by left-declining hatching, dummy data in which all values are "16" are stored. This produces the Y signals of one SD frame.

With regard to the Cr and Cb signals, as provided for the Y signals, these are divided into 8 subdivisions such that each of the areas consists of 160 horizontal pixels x 512 vertical pixels. In the same manner as in Figure 26(c), the left and bottom edges of the area coincide, respectively, with the left and bottom edges of one SD frame (180 horizontal pixels x 320 vertical pixels). 160 horizontal pixels x 32 vertical pixels in the area R1 are shifted to the right-side periphery area R2 (20 horizontal pixels x 256 vertical pixels), and dummy data in which all values are "128" are stored in area R3 (20 horizontal pixels × 224 vertical pixels); and, the pixels are moved in those (8 × 8) units as much as possible.

In the above-mentioned manner, Y signals which are one-eighth of the HDS signals and pixel data of Cr and Cb signals are sequentially respectively transformed into pixel data of the Y signal, and the Cr and Cb signals for one frame of SD signals and pixel data of, and image signals for one HD frame are converted into image signals of 8 SD frames to be applied to the VCR unit 2.

Further in the recording system of the VCR unit 2, signal processing base on the DVC standard, such as DCT computation , quantization, and variable-length decoding are operated. A special process for treating HDS signals is performed as described below with the result that image data are recorded on magnetic tape. Since according to the DVC standards, the image data for one SD frame are recorded on a split basis in 10 tracks; a group of 10 tracks is called a "track frame".

In the first mode of this twelfth embodiment, 8 SD frames for one HD frame are recorded in 8 track frames (80 tracks).

The subcode sector for a track frame, which is an auxiliary information recording area for the track frame, records information indicating that some of the 8 divisions of one HD frame are recorded in the track frame, information indicating what specific parts of the HD frame are recorded information indicating the number of pixels of Y signals and chrominance signals, and information indicating the aspect ratio which is employed. This process is performed by the auxiliary data write circuit 25 of Figure 13.

The processing that is performed by the playback system of the VCR unit 2 is similar to that described above with respect to the ninth embodiment. This processing is common to both SD and HDS signals. During the playback of HDS signals, the auxiliary data read circuit 31 reads the data in the subcode sector, and obtains the requisite information, such as which parts of one HD frame are recorded in the track frame. This information pertaining to the HDS signal is supplied to the image signal-switching processor 1.

The playback processing circuit 10' of the image signal-switching processor 1 removes any dummy data which were assigned during the recording process. The address control circuit 18 controls addresses when playback data is stored in the second HD frame memory 16 based on the HDS signal information which is supplied by the VCR unit 2.

Data in all of the areas which were divided into 8 subdivisions is processed in the same manner. The data are stored in the HD frame memory 16, and simultaneously, are read from the HD frame memory 16 as data for one HD frame. The aspect ratio for the images thus read is determined by referencing the information which is recorded in the subcode sector. Playback HDS signals are obtained in this manner.

A second mode of processing (in which horizontal pixels for chrominance signals are culled and may be carried out by the twelfth embodiment) is described herein. In the second mode, HDS signals are recorded on 4 track frames. Y signals are divided into 4 subdivisions in the screen area as shown in Figure 28. In other words, the Y signals are divided into two subdivisions in the both horizontal and vertical directions, composed of 1280 horizontal pixels × 1024 vertical pixels, to have four subdivisions. Each of the areas A through D which are composed of 640 horizontal pixels × 512 vertical pixels can be converted into pixel data for one SD frame of Y signals in the same manner as described in the first mode. In area R3 of Figure 26(c) in the second mode also, dummy data in which all values are "16" are stored.

With regard to Cr and Cb signals, pixels are culled to one-half in the horizontal direction such that each of the areas consist of 320 horizontal pixels × 1024 vertical pixels. Further, the pixels are divided into two subdivisions in the both horizontal and vertical directions to have four subdivisions. The areas after the division are respectively composed of 160 horizontal pixels × 512 vertical pixels. The pixels which are in the subdivisions are converted to pixel data for one SD frame of Cr and Cb signals in the same manner as described in the twelfth embodiment.

Similarly, in the second mode, one HD frame is divided into 4 subdivisions to be converted into image data of 4 SD frames. The image data are supplied to the VCR unit 2 and recorded on the magnetic tape.

In the second mode, 4 SD frames corresponding to one HD frame are recorded on a split basis in 4 track frames (40 tracks).

Recorded in the subcode sector, which is an auxiliary information recording area for the track frame, is information indicating that some of the 4 divisions of one HD frame are recorded in the track frame, information indicating what specific parts of the HD frame are recorded, information indicating the number of pixels of Y signals and chrominance signals, and information indicating the aspect ratio which is employed.

In this embodiment, the first switching circuit 13 is switched by the user when the user selects either recording of SD signals or recording of HDS signals. The switching circuit 17''c of the recording processing circuit of Figure 25 is also switched when the user selects either the first or second mode. The information indicating either SD signal recording or HDS signal recording and the information indicating either the first or second mode, as the case may be, is supplied to a controller (not shown in the figure). The controller then performs switching control on the various units when the VCR unit 2 performs recording. For playback, the same controller determines whether a given signal is an SD signal or an HDS signal and whether it is the first mode or the second mode, based upon the information read by the auxiliary data read circuit 31, and performs switching control on the switching circuit 14, 10'c, etc.

In the first mode of this twelfth embodiment as described, HDS signals, which have the ratio of the pixel number for the Y signals to the pixel number for each of the Cr and Cb signals (YC pixel number ratio) of 2:1, are divided into 8 subdivisions. In addition, dummy data of 8 pixels are inserted every 8 horizontal pixels of the Y signals. In this way, the HDS signals are converted to SD signals whose YC pixel number ratio is 4:1; therefore, an image signal recording apparatus which can record HDS signals which have different YC pixel number ratios can be provided.

Moreover, a macro-block which is a process unit for the VCR unit 2 includes two blocks of dummy data in the Y signals as illustrated in Figure 27. The DCT block consisting of the same data value will have, through a DCT computation, AC coefficients which have the value "0". They can be compressed into a small data amount, and data from one DCT block can be assigned to other DCT blocks. In this way, the VCR has excellent capability to record/reproduce image signals while maintaining high HDS resolution.

In the second mode of this twelfth embodiment, by culling chrominance signal pixels, the HDS signals with the YC pixel number ratio of 2:1 can be converted into the SD signals with the YC pixel number ratio of 4:1 which are reproduced and played back. This makes it possible to increase the number of prints (recordings) while using somewhat poor resolution.

The pixel number of HDS signals are not limited to 1280 horizontal pixels × 1024 vertical pixels for Y signals; for example, 1920 horizontal pixels × 1036 vertical pixels can be used. It is not always necessary that one HD frame is divided equally into 8 or 4 subdivisions; for example, 1920 horizontal pixels × 1036 vertical pixels can be divided into 12 or 6 subdivisions.

The value of dummy data to be stored in marginal regions is not limited to "16" or "128" only. Any identical values may be used as long as it remains within the range of a DCT block (8 horizontal × 8 vertical pixels) which is a minimum unit for the DCT computation.

The division may be performed outside the screen area; for example, the vertical division can be performed on a 8-pixel basis and may have different SD frames.

It is not necessary that an image signal (a HDS signal) is composed of a Y signal and Cr and Cb signals; for example, they can be composed of G (green), R (red), and B (blue) signals.

### THIRTEENTH EMBODIMENT

A thireenth embodiment uses the VCR unit 2 based on the DVC standard for HD signals to record/reproduce high-definition still-picture signals (hereafter referred to as "UHDS signals"), of higher definition than the HD signals. The image signal recording/reproducing apparatus is configured basically the same as the embodiment shown in Figure 13. However, the SD input signal applied to terminal 11 and the SD output signal emitted from terminal 12 are changed to be the HD input signal and the HD output signal respectively. The HD still-picture input signal applied to terminal 12 and the HD still-picture output signal from terminal 19 are changed to the UHD still-picture input signal and the UHD still-picture output signal respectively; the HD frame memory 16 is changed to the UHD memory.

The UHDS input signal of this embodiment is composed of G (green), R (red), and B (blue) signals. The G signal is composed of 2016 horizontal effective pixels and 1024 vertical effective lines associated with one UHD frame. The R and B digital signals are respectively composed of 1008 horizontal pixels × 512 vertical pixels. Note that a frame of UHDS signal is called 1 UHD flame hereinafter and a frame of HD signal is called 1 HD frame.

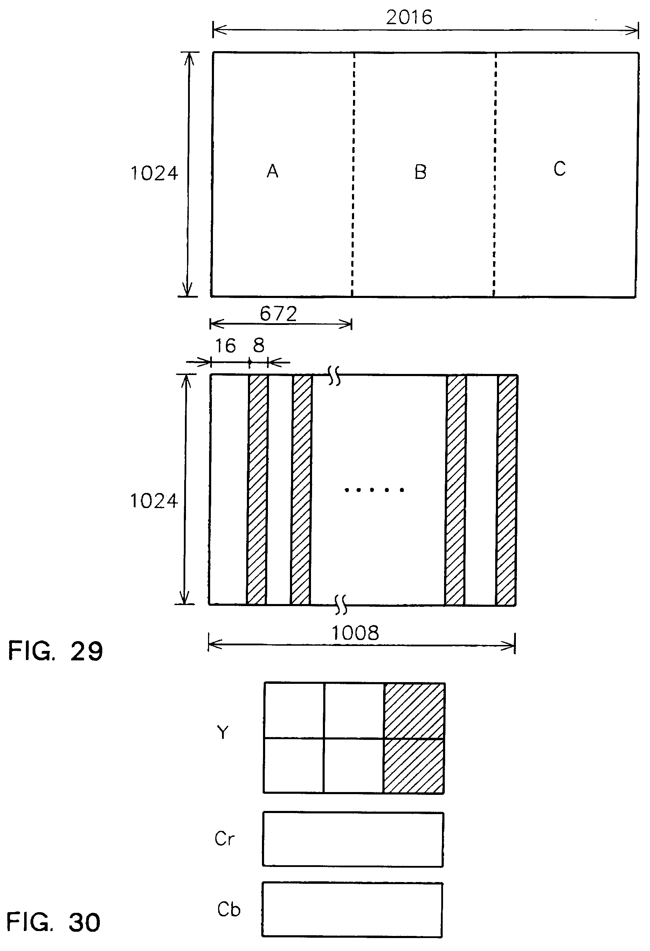

In this thirteenth embodiment, 1 UHD frame is divided into three divisions in the screen region to convert it to the image data associated with 3 HD frames. Specifically, for G signals, 1 UHD frame is divided horizontally in three subdivisions as shown in Figure 29(a). Each of the resulting areas A through C is composed of 672 horizontal pixels × 1024 vertical pixels. In each of the three divisions, as shown in Figure 29(b), dummy data of 8 pixels are inserted every 16 horizontal pixels (8 horizontal pixels × 1024 vertical pixels) to make 1008 horizontal pixels × 1024 vertical pixels. These pixel data are used as the Y signal pixel data associated with 1 HD frame. At this time all dummy data have the value "16." Note that, in Figure 29(b), the illustrated width of 16 and 8 horizontal pixels are enlarged for easier observation.

Similarly, for the R and B signals, an image signal composed of 336 horizontal pixels × 512 vertical pixels can be obtained by dividing R and B signals into three subdivisions. These pixel data must be treated as the pixel data for 1 HD frame of the Cr and Cb signals.

In the DVC standard for HD signals, in the so-called 1125/60 method as mentioned above, a Y signal is represented by 1008 horizontal pixels × 1024 vertical pixels, each of the chrominance signals (Cb and Cr signals) are represented by 336 horizontal pixels × 512 vertical pixels. With the above division conversion, G, R, and B signal pixel data of one UHD frame are converted to the pixel data representing Y, Cr, and Cb signals of three HD frames, which are then supplied, to the VCR unit 2 based on the DVC standards for HD signals to be recorded on a magnetic tape. As shown in Figure 30, a macro-block which is the unit of processing consists of six DCT blocks (actually G signals) for the Y signal and one DCT block each for the Cr signal and Cb signal (actually R and B signals respectively),. In the six DCT blocks for the Y signal, two blocks, shown in cross-hatching, are used for dummy data.

During reproduction, inverse process of recording is performed as in the twelfth embodiment to put out regenerated UHDS signals.

As described above according to this mode of embodiment thirteen, an image signal recording/playback apparatus which is capable of recording/reproducing still pictures of HD signals and those with higher definition than HD signals is provided.

Various modifications will become possible for those skilled in the art after receiving the teachings of the present disclosure without departing from the scope thereof.

## Claims

1. A method for recording a digital image signal having a first definition, comprising:
a first step of splitting a still-picture signal having a second definition higher than said first definition into n subdivisions, where n is an integer at least equal to 2;
a second step of converting the results of said first step into image signals of said first definition to produce split conversion signals; and
a third step of recording said split conversion signals on a recording medium.

2. A method, as claimed in claim 1, wherein said second step includes converting said image signals for a predetermined pixel block and said third step includes compressing image data by orthogonally transforming said image signals for said predetermined pixel block.

3. A method, as claimed in claim 2, wherein each of said image signals having said first and second definitions is composed of a luminance signal and two chrominance signals, said third step records in units of macro-blocks, each of said macro-blocks consisting of a plurality of said predetermined pixel blocks of said luminance signal and said chrominance signals which correspond to said luminance signal, and in said second step said macro-blocks are converted.

4. A digital image signal recording apparatus for recording an image signal having a first definition, comprising:
a split conversion means for splitting a still-picture signal having a second definition higher than said first definition into n subdivisions, where n is an integer at least equal to 2 and converting the results into image signals of said first definition to produce split conversion signals; and
recording means for recording said split conversion signals on a recording medium.

5. Apparatus, as claimed in claim 4, wherein said recording means comprises an image data compression means which compresses image data by performing an orthogonal transformation on said image signals for a given pixel block, and said split conversion means converts said image signals for a given pixel block.

6. Apparatus, as claimed in claim 5, wherein each of said image signals having said first and second definitions are composed of a luminance signal and two chrominance signals, said recording means records in units of macro-blocks, each of said macro-blocks consisting of a plurality of said given pixel blocks of said luminance signal and of said chrominance signals which correspond to said luminance signal, and said split conversion means converts said given macro blocks.

7. Apparatus, as claimed in claim 4 or 5, wherein said split conversion signal contains a marginal region having no pixels of said second definition still-picture signal, and wherein said split conversion means has a dummy data insertion means for inserting dummy data, in which all values are the same at least in the range of said given pixel block, into said marginal region.

8. Apparatus, as claimed in any one of claims 4 through 7, wherein said split conversion means produces one frame of said split conversion signal formed by dividing said still-picture signal into n subdivisions two or more times.

9. Apparatus, as claimed in any one of claims 4 through 7, wherein said split conversion means produces one frame of said n-split conversion signal at least once in accordance with the input interval of said still-picture signal of said second definition.

10. Apparatus, as claimed in any one of claims 4 through 9, wherein said recording means has an auxiliary information add-on means which adds auxiliary data indicating what number the signal is in said n-split when recording said split conversion signal on said recording medium.

11. Apparatus, as claimed in any one of claims 4 through 9, including a culling conversion means which converts said still-picture signal of said second definition into an image signal of said first definition by culling pixels, and produces a culling conversion signal, and said recording means records said culling conversion signal together with said split conversion signal on said recording medium.

12. Apparatus, as claimed in any one of claims 4 through 11, wherein said split conversion means divides said second definition still-picture signal into n subdivisions within a screen area.

13. Apparatus, as claimed in claim 6, wherein said split conversion means divides said second definition still-picture signal into n subdivisions by culling said macro-block units in n ways.

14. Apparatus, as claimed in any one of claims 5 through 11, wherein said split conversion means divides said second definition still-picture signal into n subdivisions by culling by units of pixels in n ways.

15. Apparatus, as claimed in claim 6, wherein the ratio of the pixel number of two chrominance signals of said second definition still-picture signal to the pixel number of said luminance signal of said second definition signal is horizontally 1/s, where s is a first integral number, and vertically 1/t, where t is a second integral number, and wherein the ratio of the pixel number of each of two chrominance signals of said first definition image signal to the pixel number of said luminance signal of said first definition signal is horizontally 1/t, where t is said second integral number, and vertically 1/s, where s is said first integral number, and said split conversion means comprises a block conversion means for converting a block consisting of s horizontal pixels × t vertical pixels of luminance signals of said second definition still picture into a block consisting of t horizontal pixels × s vertical pixels

16. Apparatus, as claimed in claim 8, wherein, when outputting one of said n divided frames m times, where m is an integer equal to at least 2, said split conversion means rearranges pixels in said one frame i amount of times, where i is an integer smaller than m.

17. Apparatus, as claimed in any one of claims 4 through 16, wherein said recording means comprises a sequence number assigning means for adding a sequence number indicating the order of one group of data on said recording medium during recording said split conversion signals and wherein said sequence number assigning means adds said sequence numbers corresponding to each frame of said n-split conversion signals.

18. A digital image signal recording/playback apparatus that records/reproduces image signals having a first definition, comprising:
a split conversion means for splitting a still-picture signal having a second definition higher than said first definition into n subdivisions, where n is an integer at least equal to 2, converting the results into image signals of said first definition to produce split conversion signals;
recording means for recording said split conversion signals on a recording medium;
playback means for reproducing said signals recorded on said recording medium and producing output signals; and
playback conversion means for converting said output signals into still-picture signals of said second definition.

19. A digital image signal playback apparatus for reproducing image signals of a first definition recorded on a recording medium, comprising:
playback means for splitting still-picture signals having a second definition higher than said first definition into n subdivisions, where n is an integer at least equal to 2, to convert them to image signals of said first definition, and reproducing said converted signals recorded on said recording medium; and
playback conversion means for converting said reproduced signals into a still picture of said second definition.

20. An image signal processor connected to a digital image signal recording apparatus for recording image signals of a first definition, comprising:
a split conversion means in which a still-picture signal of a second definition higher than said first definition is divided by n, where n is an integer at least equal to 2, to convert it into said image signals of said first definition and to produce split conversion signals; and wherein
said split conversion signals are applied to said digital image signal recording apparatus.

21. A method of recording a first definition image signal having a luminance and two chrominance signals with a ratio of pixel numbers m:1, where m is an integer at least equal to 2, said method comprising the steps of:
splitting a still-picture signal of a second definition higher than said first definition into s subdivisions to produce split conversion signals, where s is an integer at least equal to 2, said second definition signal having a luminance signal and two chrominance signals with a ratio of pixel numbers n:1, where n is an integer at least equal to 1 and n < m; and
recording image data on a recording medium by compression, orthogonally transforming image data for a given pixel block, and processing signals on a macro-block basis which comprises one of each given pixel block of said two chrominance signals and corresponding m given pixel blocks of said luminance signal, and
providing said macro-blocks by adding on m-n given pixel blocks of dummy data to the block group consisting of n given pixel blocks of luminance signals and one of each given pixel block of two chrominance signals which make up said second definition image signal.

22. A method, as claimed in claim 21, including the steps of culling pixels of the chrominance signals of said second definition still-picture signals, converting the pixel ratio between said luminance signals and said two chrominance signals to m:1 and dividing said second definition still-picture signal by t, where t is an integer at least equal to 2, to convert said image data into said first definition image signals and to produce culled split conversion signals, and recording said split conversion signals or said culled split conversion signals on said recording medium.

23. A digital image signal recording apparatus for recording a first definition image signal having a luminance and two chrominance signals with a ratio of pixel numbers m:1, where m is an integer at least equal to 2, said apparatus comprising:
a split conversion means for splitting a still-picture signal of a second definition higher than said first definition into s subdivisions to produce split conversion signals, where s is an integer at least equal to 2, said second definition signal having a luminance signal and two chrominance signals with a ratio of pixel number n:1, where n is an integer at least equal to 1 and n < m; and
a recording means having an image data compressing means for recording data on a recording medium by compression, orthogonally transforming image data for a given pixel block, and processing signals on a macro-block basis which comprises one of each given pixel block of said two chrominance signals and corresponding m given pixel blocks of said luminance signal; whereby
said split conversion means provides said macro-blocks by having m-n given pixel blocks of dummy data add-on to the block group consisting of n given pixel blocks of luminance signals and one of each given pixel block of two chrominance signals which make up said second definition image signal.

24. A digital image signal recording apparatus, as claimed in claim 23, including a culled conversion means for culling pixels of said chrominance signals of said second definition still-picture signals, wherein the pixel ratio between said luminance signals and said two chrominance signals are converted to m:1 and said second definition still-picture signal is divided by t, where t is an integer at least equal to 2, to convert the image data into said first definition image signals and to produce culled split conversion signals, said recording means records said split conversion signals or said culled split conversion signals on said recording medium.

25. Apparatus, as claimed in claim 23 or 24, wherein said dummy data contain an identical value at least within a given pixel block.

26. A digital image signal recording/playback apparatus which records/playsback a first definition image signal having a luminance and two chrominance signals with a ratio of pixel numbers m:1, where m is an integer at least equal to 2, said apparatus comprising:
a split conversion means for splitting a still-picture signal of a second definition higher than said first definition into s sub-divisions to produce split conversion signals, where s is an integer at least equal to 2, said second definition signal having a luminance signal and two chrominance signals with a ratio of pixel numbers n:1, where n is an integer at least equal to 1 and n < m;
a recording means for recording said split conversion signals onto a recording medium;
a playback means for playing back the signals recorded on said recording medium to produce playback output signals;
a playback conversion means for converting said playback output signals into said second definition still-picture signals to be put out; and wherein
said recording means comprises an image data compression means which compresses image data by orthogonally transforming image data for each given pixel block, said image data being processed on a macro-block basis which comprises one of each given pixel block of said two chrominance signals and corresponding m given pixel blocks of said luminance signal; and whereby
said split conversion means provides said macro-blocks by having (m-n) given pixel blocks of dummy data add-on to the block group consisting of n given pixel blocks of luminance signals and one of each given pixel block of two chrominance signals which make up said second definition image signal.

27. A digital image signal recording apparatus for recording a first definition image signal having a luminance and two chrominance signals with a ratio of pixel numbers m:1, where m is an integer at least equal to 2, said apparatus comprising:
a split conversion means for splitting a still-picture signal of a second definition higher than said first definition into s sub-divisions to produce split conversion signals, where s is an integer at least equal to 2, said second definition signal having three different signals with a ratio of pixel numbers n:1, where n is an integer at least equal to 1 and n < m; and
a recording means for recording said split conversion signals on a recording medium and wherein said recording means has an image data compressing means which compresses image data by orthogonally transforming image data for a given pixel block, and processing signals on a macro-block basis which comprises one of each given pixel block of said two chrominance signals and corresponding m given pixel blocks of said luminance signal; whereby
said split conversion means provides said macro-blocks by having m-n given pixel blocks of dummy data add-on to the block group consisting of n given pixel blocks of luminance signals and one of each given pixel block of two chrominance signals which make up said second definition image signal.

28. A digital image signal recording apparatus having a recording means for recording data on a recording medium by compression, by performing an orthogonal transformation on image signals that are quantized in p bits, where p is an integer at least equal to 1, and composed of three independent signals for a given pixel block, said apparatus comprising:
a split conversion means for splitting still-picture signals that are quantized in q bits, where q is an integer such that q > p, and are composed of three independent signals, into high-bit signals that are requantized in terms of high u bits, where u is an integer at least equal to 1, for each pixel, and low-bit signals that are obtained by subtracting from the original signals the signals that are requantized in terms of high v bits, where v is an integer such that u ≥ v, for each pixel, that converts said high-bit and low-bit signals into signals composed of p bits, and that produces split p-bit signals; and
a sorting means that outputs said split p-bit signals by sorting them so that they make up said given pixel block; where-by
said recording means records the output signals from said sorting means in said recording medium.

29. A digital image signal recording apparatus having a recording means for recording data on a recording medium by compression, by performing an orthogonal transformation on image signals that are composed of three independent signals and quantized in p bits, where p is an integer at least equal to 1, for a given pixel block, said apparatus comprising:
a split conversion means that splits into signals, composed of p bits, still-picture signals that are quantized in terms of q bits, where q is an integer such that q > p, and are composed of three independent signals by dividing them substantially equally, by the q-p power of 2 for each pixel, and that outputs the results as split signals composed of p bits; and
a sorting means that outputs said split p-bit signals by sorting them so that they make up said given pixel block; whereby
said sorting means sorts the signals so that the pixels comprising said given pixel block of signals equal in number to the q-p power of 2 are all distinct; and whereby
said recording means records the output signals from said sorting means in said recording medium.

30. Apparatus, as claimed in claim 28 or 29, wherein said recording means creates macro-blocks by grouping said prescribed signal blocks composed of said three independent signals into a prescribed number of groups and performs signal processing on the units of macro-blocks, and wherein said sorting means performs said sorting so that the respective signal blocks for said split p-bit signals that correspond to the same position on the screen are contained in the same macro-block.

31. A digital image signal recording/playback apparatus having a recording means for recording data in a recording medium by compression, by performing an orthogonal transformation on image signals that are composed of three independent signals and quantized in p bits, where p is an integer at least equal to 1, for a given pixel block, and a playback means that reproduces said signals recorded on said recording medium and produces playback output signals, said apparatus comprising:
a split conversion means for splitting still-picture signals that are quantized in q bits, where q is an integer such that q > p, and are composed of three independent signals into high-bit signals that are requantized in terms of high u bits, where u denotes an integer at least equal to 1, for each pixel, and low-bit signals that are obtained by subtracting from the original signals the signals that are requantized in terms of high v bits, where v is an integer such that u ≥ v, for each pixel, that converts said high-bit and low-bit signals into p bits of signals, and that produces split p-bit signals; and
a sorting means that outputs said split p-bit signals by sorting them so that they make up said given pixel block; whereby
said recording means records the output signals from said sorting means in said recording medium; and whereby
said playback means includes a playback conversion means that converts the playback output signals that correspond to said high-bit signals into said still-picture signals composed of q bits by adding the playback low-bit signals corresponding to said low-bit signals to the playback high-bit signals that are obtained by requantizing the playback signals corresponding to said high-bit signals in terms of high v bits.

32. A digital image signal recording/playback apparatus having a recording means for recording data on a recording medium by compression, by performing an orthogonal transformation of image signals that are composed of three independent signals and quantized in p bits, where p is an integer at least equal to 1, for a given pixel block, and a playback means that reproduces said signals recorded on said recording medium and produces playback output signals, said apparatus comprising:
a split conversion means for splitting into signals composed of p bits, still-picture signals that are quantized in q bits, where q is an integer such that q > p, and are composed of three independent signals by dividing them substantially equally by the q-p power of 2 for each pixel, and that outputs the results as split p-bit signals; and
a sorting means that outputs said split p-bit signals by sorting them so that they make up said given pixel block; whereby
said sorting means sorts the pixels comprising said given peel blocks, equal in number to the q-p power of 2 and obtained by sorting said split p-bit signals, so that the pixels are all distinct; whereby
said recording means records the output signals from said sorting means in said recording medium; and whereby
said playback means includes a playback conversion means that converts said playback output signals that correspond to the split p-bit signals, dual in number to the q-p power of 2, into said still-picture signals of q bits by incrementing the playback signals for each pixel.

33. Apparatus, as claimed in claim 32, wherein said playback means includes an error correction means that corrects errors in playback signals, such that said playback conversion means creates said still-picture signals of q bits by means of other playback signals that correspond to the same pixel, if some of the playback signals that correspond to split q-bit signals equal in number to the q-p power of 2 are not correctable.

34. A digital image signal recording apparatus for recording digital image signals in which the effective number of pixels per frame is j horizontal pixels × k vertical pixels, where j and k are both integers at least equal to 1, and at least one of them is at least equal to 2, said apparatus comprising:
a camera means in which the effective number of pixels in either the horizontal or the vertical direction, or both, is greater than said effective number of pixels per frame, and in both the horizontal and the vertical directions the effective number of pixels is no less than the number of pixels per frame, said camera means producing output signals;
a vibration detection means that detects vibrations in said camera means;
a vibration compensation means that selects an area composed of j horizontal pixels × k vertical pixels from the output signals from said camera means in order to compensate for said detected vibrations, converts the output signals into said digital image signals, and outputs them as vibration compensation signals;
a split conversion means that selects an area greater than that composed of j horizontal pixels × k vertical pixels from said output signals from said camera means, divides the area into n subdivisions, where n is an integer at least equal to 2, converts the output into said digital image signals of n frames, and outputs the results as split conversion signals;
a recording means for recording said vibration compensation signals or split conversion signals on a recording medium; and
a switching means that switches between a first mode, in which said vibration compensation signals are recorded, and a second mode, in which said split conversion signals are recorded on said recording medium.

35. A digital image signal recording apparatus for recording digital image signals that are quantized in p bits, where p is an integer at least equal to 1, in which the effective number of pixels per frame is j horizontal pixels × k vertical pixels, where j and k are both integers at least equal to 1, and at least one of them is at least equal to 2, said recording apparatus comprising:
a split conversion means for converting still-picture signals that are quantized in q bits, where q is an integer such that q > p, or still-picture signals in which the effective number of pixels is greater than those composed of j horizontal pixels × k vertical pixels by performing an n-division, where n is an integer at least equal to 2, to generate said digital image signals of n frames, and outputs the results as split conversion signals; and
a recording means that records said split conversion signals on a recording medium; whereby
said recording means includes a compression means that compresses the image data by performing an orthogonal transformation on a given pixel block so that the amount of data in a given processing unit composed of multiple pixel blocks is less than a given amount; and whereby
said split conversion means, when performing said split conversion, adds said given pixel block composed of dummy data of the same value to said given pixel block and arranges the results so that the given pixel block that is added is included as uniformly as possible in said given processing unit.
